# EUROPEAN PATENT SPECIFICATION

(11) **EP 4 504 532 B1**
(45) Date of publication and mention of the grant of the patent: **25.03.2026**
(21) Application number: 23721147.9
(22) Date of filing: 07.04.2023
(51) Int. Cl.: F16K 15/20, B60C 29/06, F16L 37/23

(54) **PNEUMATIC VALVE SYSTEM AND METHODS OF USING THE SAME**
PNEUMATISCHES VENTILSYSTEM UND VERFAHREN ZUR VERWENDUNG DAVON
SYSTÈME DE SOUPAPE PNEUMATIQUE ET SES PROCÉDÉS D'UTILISATION

(30) Priority: 08.04.2022 US 202263328746 P
(43) Date of publication of application: 12.02.2025
(73) Proprietor: Clik Corporation, Westlake Village, CA 91361 (US)
(72) Inventor: QUINTANA, John, Camarillo, CA 93012 (US); CARDIN, Daniel B., Las Vegas, NV 89141 (US)
(74) Representative: Germain Maureau
(86) International application number: PCT/US2023/017843
(87) International publication number: WO 2023/196570

(56) References cited:
- WO-A1-2021/154892
- JP-U- S4 950 901
- JP-U- S53 138 303
- US-A1- 2020 331 311

## Description

### CROSS REFERENCE TO RELATED APPLICATIONS

The present application claims the benefit of United States Provisional Application Serial No. 63/328,746 filed on April 8, 2022.

### FIELD OF THE INVENTION

Embodiments of the present invention relates generally to a pneumatic valve system for use with fluid pumps and methods of making and using the same. More particularly, the embodiments of the present invention relates to improved valve systems as an alternative to Schrader, Presta, and Dunlop valves, and other pneumatic valves. WO-2021/154892-A1, JP-S53-138303-U1, US2023/331311-A1 and JP-S49-50901-U1 provide background in the technical field.

### BACKGROUND OF THE INVENTION

Pneumatic valve systems for connecting a pressurized air source (e.g., a pressurized tank or an air pump) to a pneumatic tire, tube, or other structure have been in use for quite some time. Conventional devices heretofore devised and utilized are widely used, and yet continue to have design drawbacks. These devices are awkward to attach and keep attached while filling a tube or tire, and often do not provide a reliable seal on the valve stem of the tire, tube, or other structure, leading to leaks. Further, a poor coupling between conventional pneumatic valves and air pressure gauges may lead to inaccurate pressure readings and improperly inflated tires, which can reduce gas mileage (or slow a bicycle) and cause uneven wear on the tire, reducing the life of the tire and potentially voiding manufacturer warrantees. While conventional devices fulfill their respective, particular objectives and requirements (i.e., increasing air pressure in a tube or tire), they also have functional drawbacks that can be frustrating. For instance, often times the use of a valve coupling requires a person to be awkwardly and uncomfortably positioned for a length of time while filling a tube or tire. In such situations, reliability in the connection of the valve is highly desirable to avoid as much physical discomfort and wasted time as possible.

The Schrader valve has significant connection problems due to the manner in which the pump-head is secured to the valve stem. Because the seal between the pump-head and the valve is made on the outside of the valve stem, the internal surface area shared between the distal end of the valve stem and the pump-head valve cavity is relatively large. As a result, the internal pressure of the tire or other vessel to which the valve is attached exerts significant force upon internal pump-head surface that can result in the pump-head being blown off of the valve without a mechanism to hold it in place. To properly secure the pump-head to the valve, a locking lever is included in the Schrader pump-head design. The grasping mouth piece of the Schrader pump-head exerts significant force to sufficiently compress the rubber in order to keep the pump-head from "popping" off due to the high instantaneous output pressures from the pump in combination with the building of internal pressure in the tire or other vessel. As a consequence, virtually all Schrader valve pump-heads suffer from the same problem - they are difficult and awkward to lock, requiring two hands and considerable finger strength to mate and lock the pump-head.

The Presta valve has several disadvantages, and is notoriously difficult to use. It has the same issues as a Schrader valve, namely, that the pump-head experiences forces sufficient to blow it off the valve stem without a locking mechanism. The locking lever and chuck are difficult and awkward to handle. The Presta valve has additional difficulties and drawbacks, including the additional inconvenience of having to unscrew the captive nut that forms part of the valve stem structure, the requirement of a specialized pump that fits the specialized Presta design, the delicate and damage-prone design of the Presta valve stem, and the common problem of the threaded core of the Presta valve stem unthreading from the stem housing when engaged with a pump-head.

Accordingly, while existing pneumatic valves are suitable for their intended purposes the need for improvement remains, particularly in providing a pneumatic valve having the features described herein.

### SUMMARY OF THE INVENTION

According to the invention, a pneumatic valve for a tire is provided with the features of claim 1.

Further embodiments are the subject matter of dependent claims.

The above-described objects, advantages and features of the invention, together with the organization and manner of operation thereof, will become apparent from the following detailed description when taken in conjunction with the accompanying drawings, wherein like elements have like numerals throughout the several drawings described herein. Further benefits and other advantages of the present invention will become readily apparent from the detailed description of the embodiments.

### BRIEF DESCRIPTION OF THE DRAWINGS

FIG. 1A provides a cross-section side view of an improved pneumatic valve system, according to an embodiment;
FIG. 1B provides a cross-sectional side view of an improved pneumatic valve system, according to an embodiment;
FIG. 2A provides an exploded perspective view of a valve stem and valve cap of an improved pneumatic valve system, according to an embodiment;
FIG. 2B is a partial sectional view of the cap member, valve seat and sealing member for the pneumatic valve system of FIG. 2A in accordance with an embodiment;
FIG. 3A provides a cross-sectional side view of a pin seat of an improved pneumatic valve system, according to an embodiment;
FIG. 3B provides a perspective view of a pin seat of an improved pneumatic valve system, according to an embodiment;
FIG. 4 provides a perspective view of an inflation pin of an improved pneumatic valve system, according to an embodiment;
FIG. 5A provides a cross-sectional side view of a valve coupler housing of an improved pneumatic valve system, according to an embodiment;
FIG. 5B provides a perspective view of a valve coupler housing of an improved pneumatic valve system, according to an embodiment;
FIG. 6 provides an exploded view of an improved pneumatic valve system, according to an embodiment;
FIG. 7A provides a cross-sectional view of an improved pneumatic valve system, according to an embodiment;
FIG. 7B provides a cross-sectional view of valve mechanism components an improved pneumatic valve system, according to an embodiment;
FIG. 7C provides a cross-sectional view of valve mechanism components an improved pneumatic valve system, according to an embodiment;
FIG. 8 provides a cross-sectional view of an improved pneumatic valve system, according to an embodiment;
FIG. 9 provides an exploded view of a pneumatic valve adapter system, according to an embodiment;
FIG. 10 provides a cross-sectional view of a pneumatic valve adapter system, according to an embodiment;
FIG. 11 provides perspective views of a pneumatic valve adapter system, according to an embodiment;
FIG. 12A provides a cross-sectional view of a pneumatic valve adapter system, according to an embodiment;
FIG. 12B provides a cross-sectional view of a pneumatic valve adapter system, according to an embodiment;
FIG. 13 provides a cross-sectional view of a pneumatic valve adapter system, according to an embodiment;
FIG. 14A provides an elevation view of a pneumatic valve adapter system, according to an embodiment;
FIG. 14B provides a cross-sectional view of a pneumatic valve adapter system, according to an embodiment;
FIG. 14C provides a cross-sectional view of a pneumatic valve adapter system, according to an embodiment;
FIG. 15 provides a cross-sectional view of a pneumatic valve adapter system, according to an embodiment;
FIG. 16A - 16C are views of a pneumatic valve adapter system according to an embodiment;
FIG. 17A - 17C are views of a pneumatic valve adapter system according to an embodiment;
FIG. 18A - 18B are views of a pneumatic valve adapter system according to an embodiment;
FIG. 18C - 18D are views of a bicycle tire incorporating the pneumatic valve adapter system of FIG. 18A-18B according to an embodiment;
FIG. 19A - 19I are views of a pneumatic valve adapter system, a pump head and a inner tube tire according to the invention;
FIG. 20A - 20H are views of a pneumatic valve adapter system, a pump head and a inner tube tire according to an embodiment;
FIG. 21A - 21G are views of a pneumatic valve adapter system, a pump head and a inner tube tire according to an embodiment;
FIG. 22A - 22H are views of a pneumatic valve adapter system, a pump head and a inner tube tire according to an embodiment;
FIG. 23A - 23H are views of a pneumatic valve adapter system, a pump head and a inner tube tire according to an embodiment; and
FIG. 24A - 24H are views of a pneumatic valve adapter system, a pump head and a inner tube tire according to an embodiment.

### DETAILED DESCRIPTION

Reference will now be made in detail to certain embodiments of the invention, examples of which are illustrated in the accompanying drawings. It should be appreciated that embodiments herein are not intended to limit the scope of the claims. In the following disclosure, specific details are given to provide a thorough understanding of the invention. However, it will be apparent to one skilled in the art that embodiments may be practiced without all of the specific details provided.

Embodiments disclosed herein provides a valve and inflation system for pneumatic tires and related devices to improve ease of use. The embodiments described herein was designed to serve as an easy-to-use tire valve and valve coupler system, and is presented as an alternative to the longstanding tire valve systems. The new valve system allows the user to apply a valve coupler to a valve stem in one linear motion without the need for applying a clasp or latch to secure the valve coupler to the valve stem. The embodiments allow for a smooth axial attachment of the valve coupler to the valve stem, and prevents leaks between the valve coupler and valve stem. Thus, the disclosed embodiments provide significant improvement over the conventional valve system, providing a valve system that is mechanically more reliable, efficient and ergonomic for the user.

In accordance with some embodiments, a miniature ball check valve mechanism is provided in combination with an inflation pin as an actuator, and a ball and groove retaining or locking mechanism for attaching a novel pump-head to the novel valve structure. Embodiments of the valve system provide for equivalent flow rates, with improved sealing stability and an easier method of actuation that eliminates the need for external threaded connections or levered locking chucks to mate and secure the pump-head to the valve. In contrast to prior valve systems, e.g., Schrader, Presta, and Dunlop valves, which require the user to exert significant downward force with a female pump-head and actuator, and to use the other hand to engage a locking lever on the valve coupler, the present valve design uses reduced or minimal force to engage and secure the female coupler of the pump-head with the valve stem. It is likely that most users will only need one hand, and as little as just two fingers, to complete the mating of the valve of the present embodiments. With relevance to its application as a cycling valve, this detail is especially significant considering the small space between wheel spokes that is often a source of frustration for recreational and professional cyclists alike. The presently disclosed valve improves in ease-of-use over conventional valves and makes it possible for those with physical limitations of the hand due to injury or disease, or simply due to lack of finger strength or coordination (e.g., as with young children or seniors), to more easily connect the pump-head and consequently use a tire or other inflatable equipment.

Beyond ease-of-use improvements, the present valve system offers considerable versatility, as it may be scaled in size or reconfigured to accommodate a wider range of flow rates, tire pressures, and sizes. As an example, a very small diameter version can be made for use in performance bicycle tires without changing the fundamental mechanism of the present valve system. Additionally, embodiments include adapter systems that are operable to be implemented with a tire or tire tube that has a Schrader, Presta, or Dunlop tire valve to allow for easy push-on and pull-off functionality, giving users the option to continue using their existing valve system with a valve stem adapter and the female coupler adapted to such use. For clarity, the term Sclaverand valve and Presta valve may be used interchangeably herein.

The presently disclosed valve may be manufactured using various materials, allowing adaptation to different environments and different uses. For applications that require corrosion resistance, such as automotive tires, stainless steel or non-ferrous metals such as brass may be used. In other applications, for example a cycling valve, where economics require a low-cost mass production material, aluminum may be used. Looking beyond metal, the valve may also be suitable for partial or complete fabrication by additive manufacturing using 3D printing materials, including; ABS, PETG, Nylon, Carbon Fiber, ASA, or Polycarbonate. 3D printed components may be produced to provide an effective low cost valve for use in numerous applications beyond vehicle tires and tubes. For example, a low-cost plastic version of the valve may effectively serve for use inflatable equipment such as inner tubes and air mattresses, and other similar devices. Inclusive in this application of invention are functional designs that are tailored to both materials; metals and carbon/non-carbon plastics. Some applications may call for a combination of several different materials, providing a valve which may comprise metal, plastic, and other materials such as rubber or carbon fiber. In addition, the present embodiments may be applied to higher pressure situations, such as valves for liquid systems, hazardous fluids, and other applications in which a reliable, leak-proof seal is required. Various design implementations are demonstrated to support a broad protection for the novelty of design across numerous applications.

In an embodiment, the pneumatic valve is used with a bicycle tire having a working air pressure of 50 psi - 150 psi (3.4 bar to 10.3 bar).

In one aspect, embodiments relate to a pneumatic valve system for easily attaching and sealing a pump-head to a valve stem by a mechanical connection. In some embodiments, the valve system may comprise (1) a valve stem with the following major components - a valve cap with a pin passage and an attachment mechanism for attaching to a valve coupler of the pump-head, a sealing mechanism having a sealing member, a seat against which the sealing member may be positioned, and a biasing member to bias the sealing mechanism to a sealed position, and a chamber into which the inflation pin passes when the pump-head is engaged with the valve stem; and (2) a pump-head comprising the following - a valve coupler comprising a housing, a pin seat, an inflation pin, a collar with ball bearings complementary to the attachment structure of the valve cap, and a bearing sleeve for providing inward force against the ball bearings (e.g., an elastic sleeve). The valve system may allow for easy, secured and sealed engagement between the valve coupler and valve stem by simply pushing down on the valve coupler on an axial path, and disengagement by pulling up on the valve coupler, without the need for levers, clasps, or other cumbersome devices. The inflation pin may displace the first sealing mechanism from the pin passage and pass into the first chamber as the valve coupler is pushed down over the valve stem, creating a passage of air through the inflation pin into the chamber. The displacement of the sealing mechanism and the insertion of the distal end of the inflation pin into the chamber allows for air from the pump-head to flow from the inflation pin into the chamber. The chamber may be in open fluid communication with the interior of a pressurizable vessel to which the valve stem is connected (e.g., a tube, a tire, a raft, an air mattress, an inflatable chair, an inflatable toy, and the like), allowing the pressurizable vessel to be inflated.

In some embodiments, the valve system may comprise (1) a valve stem with the following major components - a valve cap with a pin passage and an attachment mechanism for attaching to a valve coupler of the pump-head, a first chamber having a first sealing mechanism therein, a biasing member to bias the first sealing mechanism to a sealed position, a second chamber having a second sealing mechanism therein, and a passage between the first chamber and a second ; and (2) a pump-head comprising the following - a valve coupler comprising a housing, a pin seat, an inflation pin, a collar with ball bearings complementary to the attachment mechanism of the valve cap, and a bearing sleeve for providing inward force against the ball bearings (e.g., an elastic sleeve). The valve system may allow for easy, secured and sealed engagement between the valve coupler and valve stem by simply pushing down on the valve coupler on an axial path, and disengagement by pulling up on the valve coupler, without the need for levers, clasps, or other cumbersome devices. The inflation pin may displace the first sealing mechanism from the pin passage and pass into the first chamber as the valve coupler is pushed down over the valve stem, creating a passage of air through the inflation pin into the first chamber. The displacement of the first sealing mechanism may result in the actuation and displacement of the second sealing mechanism, thereby opening the passage between the first and second chambers. The air from the pump-head may pass from the inflation pin into the first chamber and then into the second chamber through the passage between the first chamber and the second chamber. The second chamber may be in open fluid communication with the interior of a pressurizable vessel to which the valve stem is connected (e.g., a tube, a tire, a raft, an air mattress, an inflatable chair, an inflatable toy, and the like), allowing the pressurizable vessel to be inflated.

In another aspect, the invention relates to a valve conversion system for converting a conventional pneumatic valve with a valve stem and pump-head combination that easily attaches and seals the pump-head to a valve stem by a mechanical connection. In some embodiments, the conversion system may comprise (1) a valve stem adapter with the following major components - a valve stem connector operable to attach to a pre-existing conventional valve stem, a cap with a pin passage and an attachment mechanism for attaching to a valve coupler of the pump-head, a sealing mechanism, a biasing member to bias the sealing mechanism to a sealed position, and a chamber into which the inflation pin passes when the pump-head is engaged with the valve stem; and (2) a pump-head comprising the following - a valve coupler comprising a housing, a pin seat, an inflation pin, a collar with ball bearings complementary to the attachment structure of the valve cap, and a bearing sleeve for providing inward force against the ball bearings (e.g., an elastic sleeve). The valve conversion system may allow for converting a conventional valve into an easily secured and sealed engagement between the valve coupler and the valve stem adapter by simply pushing down on the valve coupler on an axial path, and disengagement by pulling up on the valve coupler, without the need for levers, clasps, or other cumbersome devices. The inflation pin may displace the sealing mechanism from the pin passage and pass into the chamber as the valve coupler is push down over the valve stem, creating a passage of air through the inflation pin into the chamber. The displacement of the sealing mechanism and the insertion of the distal end of the inflation pin into the chamber allows for air from the pump-head to flow from the inflation pin into the chamber. In some embodiments, the valve core of the conventional valve (e.g., a Presta, Schrader, or Dunlap valve) may be removed before the valve stem adapter is attached in order to improve the performance of the of valve, leaving the valve housing to which the valve stem adapter is attached. In other embodiments, the valve core of the conventional valve may remain intact, and the valve stem adapter may be attached to the valve housing. In such embodiments, the inflation pin may displace the pre-existing valve actuator of the conventional valve when the pump-head is coupled to the valve stem adapter. In some embodiments, the valve stem adapter may include a structure that displaces the pre-existing valve actuator of the conventional valve and maintains it in an open position, leaving a valve mechanism internal to said valve stem adapter controlling the flow of fluid through the valve stem. The actuation of the valve actuator results in the chamber being in open fluid communication with the interior of a pressurizable vessel to which the conventional valve stem is connected (e.g., a tube, a tire, a raft, an air mattress, an inflatable chair, an inflatable toy, and the like), allowing the pressurizable vessel to be inflated.

In another aspect, embodiments relate to an adapter system for use with existing pneumatic valve systems (e.g., Schrader, Presta, and Dunlap valves) that includes a valve stem adapter that is operable to connect to a pre-existing valve stem (e.g., for a Schrader, Presta, or Dunlap valves) and a pump-head that is operable to securely connect to the valve stem by simply pressing the pump-head onto the valve stem in an axial manner without manipulating moving parts. In some embodiments, the valve system may comprise (1) a valve stem with the following major components - a coupling mechanism (e.g., complementary threading) to attach the valve stem adapter to the pre-existing valve stem (e.g., a Schrader, Presta, or Dunlap valve stem), a pin passage for accepting an actuating pin from the pump-head assembly, a sealing member, and a coupling mechanism for engaging the pump-head; and (2) a pump-head comprising the following - a valve coupler comprising a housing, a collar with ball bearings complementary to the second coupling mechanism of the valve stem adapter, and a bearing sleeve for providing inward force against the ball bearings (e.g., an elastic sleeve), a pin seat, and an actuator pin. The actuator pin may engage with the valve actuator of the pre-existing valve stem, thereby taking advantage of the existing valve mechanism to inflate the pneumatic device in which the valve is installed. The valve adapter system may allow for easy, secured and sealed engagement with the valve stem adapter by simply axially pressing the pump-head coupler onto the valve stem adapter, and disengagement by pulling up on the pump-head, without the need for levers, clasps, or other cumbersome devices.

In some embodiments, the valve stem adapter may replace internal actuation structure of the pre-existing valve (e.g., a Schrader, Presta, or Dunlap valve actuator) with a valve structure comprising a pin passage, a sealing member, and a biasing member. For example, the valve stem adapter may include an internal valve structure that is seated in the pre-existing valve stem housing after the internal valve mechanism of the pre-existing valve stem has been removed. The valve stem adapter may include a central channel through which air may pass when the valve mechanism is engaged, a sealing member such as a ball bearing, a sealing member seat against which the sealing member may form an airtight seal, and a biasing member for biasing the sealing member against the sealing member seat when a pin of the pump-head is disengaged from the valve stem adapter.

### Valve Stem Base

In some embodiments, the valve stem may be attached to and in fluid communication with a pressurizable vessel, such as a bicycle tire, an inner-tube, a tire, a raft, an air mattress, an inflatable chair, an inflatable toy, and the like. The valve stem may act as an inlet and outlet for such vessel, and allow for easy and secure connection with the valve coupler, which may be in fluid communication with a pressurized air source (e.g., an air compressor), in order to pressurize the vessel.

The valve stem may include a valve structure and mechanism operable to maintain an airtight seal until a pump-head is attached to the valve by a complementary valve coupler to inject air through the valve stem into the tire or other fillable vessel. In some embodiments, the valve stem may comprise a tubular shape having a central passage, a base attached to the vessel, and a valve cap structure enclosing the valve mechanism. The valve cap may attach to the base by an attachment structure for semi-permanent connection to the base of the stem. In some embodiments, the attachment structure may comprise a threading on an outer surface of a distal end of the base, the threading having a shape complementary to the shape of a threading of the valve cap. In other embodiments, the attachment structure may comprise a lip and the valve cap may comprise a circumferential concavity in an inner surface thereof, or vice versa, the lip having a shape complementary to the circumferential concavity. The valve stem base may be composed of rigid material (e.g., noncorrodible metal, such as brass, stainless steel, aluminum, etc.) and the cap may comprise the same or similar rigid material (e.g., a metal, carbon fiber, a rigid plastic, and the like). In some embodiments, the valve stem base may comprise a single, rigid (e.g., a metal, carbon fiber, a rigid plastic, and the like) or semi-rigid material (e.g., a polymeric material with limited flex). In some embodiments, the valve cap may be integral with the valve stem and comprise the same material(s).

### Valve Cap and Actuation Mechanism

The valve cap may comprise a casing having a proximal end and a distal end. In some embodiments, the proximal end may comprise a substantially cylindrical shape and an inner surface having an attachment structure complementary to the attachment structure of the base, allowing the valve cap to securely attach to the valve base in an air-tight manner. In some embodiments, the attachment structure of the valve cap may comprise a threading having a shape complementary to a shape of a threading on the outer surface of the base of the valve stem.

The second end of the valve cap may comprise an outer surface having a coupling neck for removably attaching to the valve coupler (pump-head), and a valve pin passage substantially coaxial with a central passage of the valve stem. In some embodiments, the coupling neck of the distal end of the valve cap may comprise one or more concavities, such as a circumferential concavity having a shape complementary to the shape of a coupling collar of the valve coupler. In some embodiments, the coupling collar of the valve coupler may comprise at least one ball bearing nested in the coupling collar of the valve coupler and biased inwardly by the elastic sleeve. In some embodiments, the pin passage may comprise a substantially cylindrical passage, the passage being co-axial with the central passage of the valve stem, and traversing the distal end of the valve cap. The pin passage may comprise a diameter to accept the inflation pin of the valve coupler, such that the inflation pin may pass through the pin passage and into the central passage of the valve stem.

The valve cap may include at least one valve mechanism and the valve stem may include at least one sealing member and may be held in a sealed position by at least one biasing member until the pump-head is coupled to the valve stem. The valve mechanism may be positioned between the valve base and the valve cap, and fit entirely within the valve base and/or the valve cap. In some embodiments, the biasing member may comprise a spring having an overall substantially cylindrical shape (e.g., an open coil shape), the spring having an outer diameter complementary to (e.g., substantially similar to, but smaller than) an inner diameter of the valve cap. In some embodiments, the base of the valve stem may comprise a shoulder on an inner surface at or near the bottom of the chamber, the shoulder being operable to provide a seat for a biasing member, the biasing member providing an elastic force for biasing a sealing member toward a sealed position (e.g., against a sealing ring of the valve cap). The at least one sealing mechanism may include a sealing member positioned at the upper end of the biasing member and having a shape that is complementary to the pin passage in the valve stem, such as a spherical shape, an ovular shape, a conical pyramid shape, or other shapes operable to engage with the biasing member and form a seal with a sealing ring in the pin passage of the valve cap. The air pressure behind the sealing member when the tire or other pneumatic vessel is inflated may be sufficient to reliably seat and maintain the sealing member in a sealed position in the pin passage. Thus, the spring may be a light duty spring, and the force of the spring may be easily countered by the downward force of the inflation pin when the pump-head is attached to the valve stem.

In some embodiments, the sealing mechanism may comprise a substantially spherically shaped sealing member (e.g., a ball bearing, or other substantially spherical structure comprising a rigid or semi-rigid material such as polymeric, metal, or ceramic materials, or composites thereof), a sealing rod having a flared tip, or a related structure, and the spring may have an inner diameter smaller than an outer diameter of the sealing member, such that the sealing member is operable to sit on an upper end of the spring. The outer diameter of the sealing member may be smaller than an inner diameter of the valve cap, such that the sealing member may move freely within the valve cap and air may pass around the sealing member when the sealing member is in an open position (e.g., not seated against a sealing ring of the valve cap). In some examples, the sealing member may be fixed to the upper end of the spring. The sealing member may engage and press against an inferior surface of a sealing ring to close the pin passage and prevent the flow of air through the valve. In the case of a spherical or spheroidal ball as the sealing member, the spring or other biasing member may be omitted, as the air pressure behind the ball bearing ensures it is forced into the O-ring, and covers the interior diameter. In such examples, an air permeable mesh material or short spring attached to the lower portion of the chamber may be used as a stand-off for the sealing ball so that it does not choke the air flow through the air passage at the bottom of the chamber during inflation.

The valve cap may comprise a shoulder concentric with the pin passage. The shoulder may provide a seat for a sealing ring. The sealing ring may be held in position between the shoulder of the valve cap and the circular upper tip of the valve base. The sealing ring may be compressed between the shoulder and the tip of the valve base, thereby preventing air from flowing through the threaded area of the valve cap and restricting airflow outside of the inflation pin. The sealing ring may have an outer diameter complementary to an inner diameter of the valve cap, and the sealing ring may have an inner diameter substantially smaller than an outer diameter of the sealing member. The sealing ring may provide a stop against which the sealing member is pressed by the biasing member when the valve stem is not engaged with the valve coupler. When the valve coupler is engaged with the valve cap, the inflation pin may pass through the center passage of the sealing ring. The inner diameter of the sealing ring may be substantially similar to (i.e., the same or slightly less than) an outer diameter of the inflation pin, such that it may deform or stretch slightly to allow passage of the inflation pin and form an airtight seal between the sealing ring and the inflation pin against the air pressure inside the vessel.

The sealing ring may be a compressible structure that seals against the shoulder in the inner passage in the valve cap and has a central opening through which a valve needle can be passed when the valve stem is coupled to a valve coupler. The sealing member is pressed against the sealing ring by the biasing member to create an airtight seal in the valve stem until the valve coupler is engaged with the valve stem to inflate the pressurized vessel. The sealing member (e.g., ball bearing, sealing rod, etc.) may include a spherical, spheroidal, or other tapering shape that has a greater diameter than the inner diameter of the sealing ring and naturally finds the inner diameter of the sealing ring due to its tapering shape. The sealing ring may be an O-ring type gasket with a circular or ovular cross-section that is complementary to the outer surface of the sealing member, allowing the sealing member to have significant surface area interface with the sealing ring, and thereby creating a reliable airtight seal. The sealing ring may be comprised of a semi-rigid, but compressible material such as vulcanized rubber, silicone, fluorosilicone, ethylene-propylene (EPDM), polyurethane, or other appropriate materials.

In the embodiments of the present disclosure, sealing ring may be configured such that it has an internal diameter just large enough to accept the inflation pin, providing a tight seal around the inflation pin as it is inserted through the pin passage and the sealing ring and into the chamber. The engagement of the inflation pin with the sealing ring provides a narrow path for the travel of pressurized air from the pump-head and through the valve stem. Due to the sealing ring (or other sealing device), the pin passage is only large enough for the inflation pin to pass. This is an improvement over conventional pump-head-valve stem engagements, such as the Schrader valve. In the Schrader valve design, when the pump-head is engaged to the valve, a relatively large ring-shaped passage is formed around the plunger in the valve. The pump-head pushes the plunger into a recessed position in the Schrader valve allowing a ring-shaped column of air to pass through the valve. This creates a considerable amount of blowback pressure on the pump-head of the Schrader valve. This is the reason why a Schrader valve includes the clumsy thumb lever that needs to be locked into position prior to pumping with the Schrader system. The narrow, controlled air passage of the valves of the present invention reduces the pressures experienced by the pump-head, allowing for a less rigid and clumsy coupling mechanism that is easy to use. The pump-head of the present invention can be simply pushed down over the valve stem to the point that the ball bearings find and seat in the attachment mechanism (e.g., a channel or collar) on the outer diameter of the valve stem, with an elastic bearing sleeve applying inward pressure on the bearings to seat and hold them in the attachment mechanism. The pump-head can be removed just as easily by pulling it axially away from the valve stem. Thus, some embodiments are operable to provide a pump-head with an easily attached and removed elastic quick connect mechanism. However, it is to be understood that embodiments are provided in which the quick connect collar may be a sliding ridged collar that must be moved from a seated position by sliding the collar into an open position in order to release pressure on the ball bearings and allow them to be either seated or unseated from the attachment mechanism of the valve collar.

In some embodiments, the valve system may include two independent sealing mechanisms that eliminates the pressure loss that occurs in conventional valve designs when the pump-head is decoupled from the valve stem, which can be significant (e.g., up to 10 10 PSI (0,69 bar). In such embodiments, the valve stem may include two serial chambers, each sealed off by a separate sealing mechanism. The upper chamber may include a first sealing ring against which a first sealing member is pressed when in a closed position, and the lower chamber may include a second sealing ring or a sealing seat. In some embodiments, the first sealing member may be a sealing rod having a tapering plug at its upper end that engages with the first sealing ring when in a closed position. A biasing member (e.g., a spring) may be positioned in the upper chamber and engaged with the sealing rod and may bias the sealing rod toward the first sealing member. In the case of a spring biasing member, the sealing rod may be engaged with the spring by having a portion nested within the spring, or it may be attached to the upper end of the spring. The bottom end of the spring may be seated on a shoulder of the first chamber. In some embodiments, a filter structure may be included in the upper chamber that is operable to catch particulate matter and prevent the introduction of particulates into the valve stem or the inflatable vessel to which it is attached. Particulate matter can obstruct valve mechanisms and result in valve leakage and even valve failure. The particulate filter may have a ring structure that is positioned around the shaft of the sealing rod between the plug and the spring such that it is maintained in a position adjacent to the plug. The particulate filter may be a metal mesh material or a perforated metal disk (e.g., laser-perforated stainless steel, aluminum, or other rigid material). In other embodiments, the structure of the first chamber and sealing mechanism therein may have a similar design to the chamber and sealing mechanism in the embodiments described above.

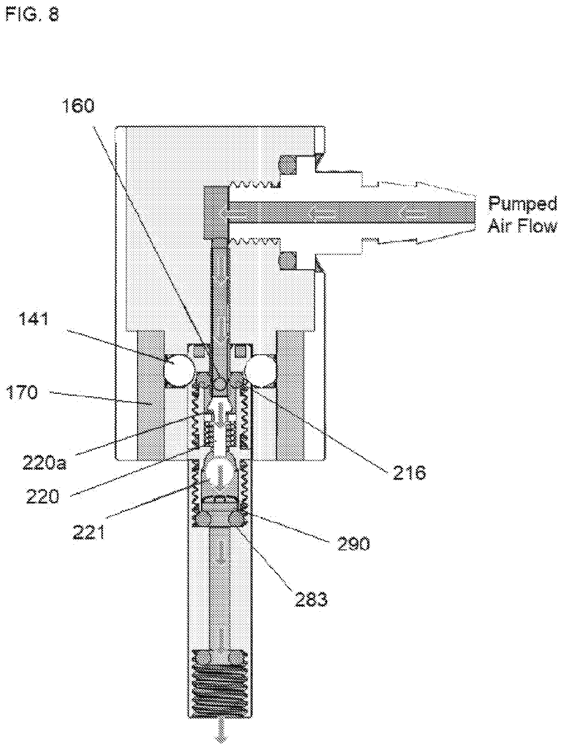

The second chamber may include a second sealing mechanism that includes a sealing member that seats against a complementary seat that provides a relatively large surface area interface between the sealing member and the complementary seat. The sealing member may be a substantially spherical rigid ball (e.g., stainless steel, aluminum, or other non-corrodible material). The complementary seat may have a spherical cap shape comprised of flexible thermoplastic, Buna-N Nitrile, gum rubber, Hypalon ^{™}, Neoprene ^{™}, polyurethane, SBR (red rubber), silicone, Viton ^{™}, fluorosilicone, ethylene propylene, butyl, or other materials. The material can be somewhat flexible such that it flexes when the sealing member pushes against the seat by the internal pressure of the pressurized vessel. In other embodiments, the seat may be a tri-point ball seat, which is highly effective in combination with a spherical sealing ball to provide an airtight seal, even at relatively low pressures in the vessel to which the valve stem is attached. The tri-point seat is composed of portions of two spherical caps of different diameters that may be joined together to create a figure 8-like structure. One of the spherical caps may have a cross-sectional area that is 10-15% larger than that of the sealing ball and the other spherical cap may have a cross-sectional that is 10-15% smaller than that of the sealing ball. The two spherical cap portions may be formed or joined together by being integrally molded, fused together by welding or lapping techniques, or other appropriate method. A seat with this geometry results in a perfectly circular land between the two spherical cap structures with no concentricity errors or squareness errors, and allows for a very tight seal with near zero leakage, even under low pressures. The seat may be made from high tensile strength, high hardness metal.

In such embodiments, the second sealing member in the second chamber may be held in place in the seat by the pneumatic pressure in the vessel. When the pump-head is engaged with the valve stem, the inflation needle passes through the first sealing ring and engages with the plug of the sealing rod in the first chamber and displaces the sealing rod from the first sealing ring. The lower end of the sealing rod opposite the plug subsequently engages with the second sealing member in the second chamber and displaces the second sealing member from the seat opening the second seal of the valve stem. The length of the sealing rod may provide a small gap between the distal end of the sealing rod and the second sealing member. The small gap (e.g., in a range of about 1 mm to about 5 mm) may allow the second sealing member to seal before the first sealing member as the pump-head is removed from the valve stem, thereby assisting the in the prevention of leakage during disengagement of the pump-head.

Air or other gas may then flow through inflation needle into the first chamber and then through the passage between the first and second chambers and through the second chamber to inflate the vessel. The second chamber may include a washer that prevents the sealing ball from passing through the lower passage of the second chamber during inflation. The "stand-off" washer may be a cage-like structure or may have leaf-like projections that allow the passage of air or other inflation gas passed the washer when the sealing ball is in contact with the washer.

### Pin Seat

The pin seat may hold the inflation pin in attachment to the valve coupler. The pin seat may be attached to a recess in the valve coupler by a connection mechanism that attaches to a coupler housing, a pin receiver, and a connecting passage. In some embodiments, the distal end may comprise a head (e.g., a disc shape) having an outer diameter greater than an outer diameter of the proximal end. In some embodiments, the head may comprise a groove, protrusion, or other graspable structure (installation structure). The installation structure may have a shape complementary to the shape of the functional portion of a tool used for installing the pin seat in the coupler housing. In some embodiments, the installation structure may have a shape complementary to at least one of a screw driver, a wrench (e.g., a fixed head wrench, a socket wrench, an Allen or hex wrench, and the like), a drill bit, and the like. In some embodiments, the installation structure may be a slot may traverse the upper surface of the distal end (e.g., the head) of the pin seat, crossing through a center-point thereof, and may be positioned such that a longitudinal axis of the slot is parallel with a central axis of the connecting passage of the pin seat (which is not otherwise visible when the pin seat is threaded into the coupler housing). Thus, a user may be able to determine the position (e.g., rotational or radial position) of the connecting passage by observing the position of the slot on the head of the pin seat. The user may further be able to determine the position of the air inlet passage of the coupler housing by observing the position of the air source attachment member, and align the connecting passage with the air inlet passage by aligning the slot with the air source attachment member. Fluid communication may thus be achieved from the air source, through the air source attachment member and the air passage of the coupler housing, through the connecting passage of the pin seat, and into the central passage of the inflation pin (and subsequently into the valve stem when the valve coupler is engaged with the valve stem).

In some embodiments, the proximal end of the pin seat (i.e., the end closest to the valve stem when the valve coupler is engaged therewith) may comprise a pin receiver, the pin receiver comprising a passage substantially co-axial with the central passage of the valve coupler and with the central passage of the valve stem. The pin receiver may be operable to receive a first end of the inflation pin. The pin receiver may have an inner diameter complementary to an outer diameter of the inflation pin such that the inflation pin may be held in a substantially static manner when the first end thereof is engaged with (e.g., inserted into) the pin receiver. The pin receiver may by in fluid communication with the connecting passage of the pin seat.

In some embodiments, the connecting passage of the pin seat may be positioned at approximately a midpoint between the first end and second end of the pin seat, and may be oriented to align with the air inlet passage when the pin seat is attached to (e.g., fully threaded into) the coupler housing. In some embodiments, the connecting passage may comprise a plurality of passages, each in fluid communication with a center point and each comprising an opening on a circumference of the pin seat, the opening being operable to be in fluid communication with the air inlet passage if aligned therewith. In some embodiments, the plurality of passages may comprise two passages, each traversing the pin seat and arranged orthogonal to each other, crossing at a center point. The two passages may thus form an X shape, with the center of the X being arranged at a center point (e.g., at a point on a central axis of the pin seat), the center point being in fluid communication with the central passage of the inflation pin. The end of each arm of the X shape may define an opening in the outer surface of the pin seat. The connecting passage may therefore be operable to put the air inlet passage of the coupler housing into fluid communication with the central passage of the inflation pin when the pin seat is at four different rotational positions (i.e., when any of the arms of the X shape is aligned with the air inlet passage).

When the attachment structure of the pin seat and coupler housing comprise complementary threadings, such an arrangement of the plurality of connecting passages may allow for the pin seat to be within 90 degrees of being fully threaded (e.g., fully tightened) into the coupler housing while providing fluid communication between the inflation pin and the air inlet passage. In some embodiments, the plurality of connecting passages may provide more than four openings arranged circumferentially evenly about the outer surface of the pin seat. In some embodiments, the plurality of connecting passages may provide 6 openings or 8 openings, such that the pin seat may be within 60 degrees or 45 degrees, respectively, of being fully tightened while still providing fluid communication between the air inlet passage and the inflation pin.

### Inflation Pin

The inflation pin may comprise a conduit having any shape operable to provide airtight fluid communication between the pin seat and the valve stem. In some embodiments, the inflation pin may comprise a substantially cylindrical shape defining a central passage, the central passage having an inlet at a first end of the inflation pin, and an outlet at or near a second end of the inflation pin. In some embodiments, the first end may be operable to be inserted into the pin receiver of the pin seat and may be in fluid communication with the connecting passage of the pin seat. In some embodiments, when engaging the valve coupler with the valve stem, the second end of the inflation pin may be operable to be inserted into and to pass through the pin passage of the valve cap, and may thereby pass into the central passage of the valve stem. In some embodiments, the outlet may be arranged on a lateral outer surface of the second end of the inflation pin, rather than on a leading surface of the second end. As such, the leading surface may be free to contact and push the sealing member of the valve stem away from the sealing ring of the valve stem as the inflation pin passes through the sealing ring, without blocking an air flow out of the outlet of the inflation pin.

### Valve Coupler

The coupler housing of the valve coupler may comprise an air source attachment member, attachment structure for the pin seat, and a collar for attaching to the valve stem. In some embodiments, the coupler housing may comprise a rigid material (i.e., a metal, a metal alloy, a plastic, a carbon fiber, and the like) and a generally cylindrical shape having a central passage which is substantially co-axial with the central passage of the valve stem when the valve coupler is engaged with the valve stem. The central passage of the coupler housing may have an inner surface having an attachment structure for securing the pin seat in place in the central passage. In some embodiments, the attachment structure of the coupler housing may comprise a threading having shape complementary to a threading on an outer surface of the pin seat, such that the pin seat may securely attach to the coupler housing by threading into the central passage of the coupler housing.

In some embodiments, the coupler housing may comprise at least one sealing ring positioned to create an airtight seal between the pin seat and the coupler housing. In some embodiments, the coupler housing may comprise a first sealing ring and a second sealing ring. The first sealing ring being positioned to create an airtight seal between the pin seat, the coupler housing, and the inflation pin at a proximal end of the pin seat (i.e., opposite the head of the pin seat). The first sealing ring of the coupler housing may have an inner diameter substantially similar to (i.e., the same or slightly less than) an outer diameter of the inflation pin. Thus, when the inflation pin is engaged with the pin seat (i.e., inserted into a pin receiver of the pin seat), the inflation pin may pass through the center passage of the first sealing ring (which may deform or stretch slightly to allow passage of the inflation pin), forming an airtight seal between the first sealing ring and the inflation pin. In some embodiments, the first sealing ring may comprise an outer diameter substantially similar to an inner diameter of the coupler housing, and may be secured in place between the proximal end of the pin seat and a first shoulder of the coupler housing when the pin seat is threaded into the coupler housing. The second sealing ring may be positioned to create an airtight seal between the pin seat and the coupler housing at distal end of the pin seat (i.e., at a head of the pin seat), and may be secured in place between a second shoulder of the coupler housing and a head of the pin seat when the pin seat is threaded into the coupler housing.

The central passage of the coupler housing may be in communication with an air inlet passage of the coupler housing. In some embodiments, a portion of the air inlet passage may be defined by an inner surface of the air source attachment member. In some embodiments, the air inlet passage may be orthogonal in relation to a central axis of the central passage of the coupler housing. In some embodiments, when the pin seat is installed in (e.g., threaded into) the coupler housing, the air inlet passage of the coupler housing may be in fluid communication with a central passage of the inflation pin by way of a connecting passage of the pin seat, and provide the only fluid communication between the central passage of the coupler housing and the inlet passage.

The air source attachment member may comprise any shape or mechanism operable to securely attach to an air source (e.g., a pneumatic hose). The air source attachment member may comprise a central passage in fluid communication with the air inlet passage. In some embodiments, the air source attachment member may comprise a standard male connector for a pneumatic system, the air source attachment member being operable to securely attach to a standard female connector (e.g., a quick connector having a rigid sleeve which may be pulled back from a set of ball bearings in order to attach to the male connector). In other embodiments, the air source attachment member may comprise an outer circumferential lip or circumferential barb, and may be operable to be inserted into a central passage of a pneumatic hose. In some embodiments, the pneumatic hose may comprise a central passage defined by an inner surface, the inner surface comprising a circumferential concavity complementary in shape to the lip or barb of the air source attachment member. In other embodiments, the central passage of the pneumatic hose may be substantially elastic and operable to create an airtight connection with the air source attachment member without having a complementary circumferential concavity on an inner surface thereof.

The valve coupler may comprise an attachment member for securely attaching to the valve cap. In some embodiments, the attachment member may comprise at least one ball bearing nested in a bearing passage traversing a wall of a collar of the valve coupler housing, the at least one ball bearing being inwardly biased by the elastic bearing sleeve encompassing the collar. The bearing passage in the wall of the collar may comprise an outer end which defines an opening in an outer surface of the collar of the valve coupler, and an inner end which defines an opening in an inner surface of the collar. The bearing passage may comprise a substantially cylindrical shape except that the inner end is narrowed in comparison to the rest of the bearing passage (i.e., the inner end has a smaller diameter than the rest of the bearing passage). The ball bearing may have an outer diameter substantially greater than a diameter of the inner end of the bearing passage, and substantially greater than the thickness of the wall of the collar, such that the ball bearing cannot pass completely through the narrowed inner end, but a portion of the ball bearing may protrude through the narrowed end. Because the ball bearing is wider than the wall of the collar, the elastic sleeve encompassing the collar will contact the portion of the ball bearing protruding from the outer end of the passage, and elastically bias the ball bearing toward the inner end. The ball bearing may thus extend into the circumferential concavity of the second end of the valve cap when the valve coupler is engaged with the valve stem, securing the valve coupler in place on the valve stem.

### Coupler Sleeve

The coupler sleeve may be arranged around the collar of the coupler housing. In some embodiments, the coupler sleeve may comprise a substantially cylindrical shape having an inner diameter complementary to (e.g., substantially similar to) an outer diameter of the collar. In some embodiments, the coupler sleeve may be comprised of an elastomeric material operable to provide an elastic inward force against the ball bearings of the coupler housing. In some embodiments, when the valve coupler is engaged with the valve stem, the inward force exerted on the ball bearings by the elastomeric coupler sleeve is sufficient to withstand an outward pressure which is exerted on the ball bearings from the attachment structure of the valve cap as the air being passed into the vessel, and thus the valve coupler does not pop off of the valve stem due only to the outward pressure created by filling the vessel with air. At the same time, the elastomeric coupler sleeve may be designed to provide an inward force on the ball bearings which may be easily overcome by pulling the valve coupler away from the valve stem with one hand. In some embodiments, the inward force of the elastomeric coupler sleeve may be overcome by pulling the valve coupler away from the valve stem with the thumb and index or other finger. The elastomeric coupler sleeve may comprise any elastic material operable to provide an inward force against the attachment device of the coupler housing collar. In some embodiments, the elastic sleeve may comprise at least one of polytetrafluoroethylene (PTFE), natural rubber, synthetic rubber, nitrile rubber, silicone rubber, urethane rubbers, chloroprene rubber, and Ethylene Vinyl Acetate.

Thus, the valve coupler may be engaged with the valve stem by simply aligning the collar of the valve coupler with the valve cap of the valve stem, and applying force against the valve coupler with one hand. This action may cause the collar to slide down over and engage with the valve cap. The force applied against the valve coupler must be sufficient to: 1) cause the ball bearing(s) of the collar to move outwardly against the inward force of the elastic sleeve in order to slide over an upper lip of the valve cap before moving back inwardly into the attachment member of the valve cap (e.g., the circumferential concavity), and 2) cause the inflation pin to insert through the center of the sealing ring and disengage the sealing member from the sealing ring against the bias of the biasing member, such that the outlet of the inflation pin moves past the sealing ring and into the fluid communication with the central passage of the valve stem. As discussed above, the sealing ring may have an inner diameter that is equal to or slighting narrower than the outer diameter of the inflation pin, such that an airtight seal is made between the inflation pin and the sealing ring. The airtight engagement of the sealing ring and inflation pin results in the restriction of the flow of air between the pump-head and the valve stem to passage through the inflation pin. This reduces the force applied to the pump-head by the pressurized air in the pneumatic vessel to a negligible amount, thereby allowing the pump-head to be attached using the elastomeric coupler sleeve connection mechanism without the need for cumbersome locking mechanisms like that of the Schrader valve design.

In some embodiments, the coupler sleeve may have a rigid, sliding sleeve that holds the ball bearings seated in the receiver in the valve stem cap. The sliding sleeve may have a first inner diameter sufficient to pass along the collar of the coupler housing and hold the ball bearings seated in the receiver in the valve stem cap. The sliding sleeve may have a second inner diameter that is sufficiently large to allow the ball bearings to release from the receiver in the valve stem cap and to allow the pump-head to be pulled off of the valve stem. The sliding sleeve may be biasing toward a closed position in which the first inner diameter is positioned over the ball bearings in order to lock the ball bearings into position in the receiver in the valve stem cap. In order to release the pump-head, the sliding sleeve can be pulled upward toward the pump-head in order to align the second inner diameter with the ball bearings and allow them to unseat from the receiver in the valve stem cap. The pump-head can then be removed by pulling the pump-head axially up and off of the valve stem. Embodiments that include the sliding sleeve also provide an easily operated engagement mechanism that can be attached and removed using one hand. The user can pull the sliding sleeve back into a retracted position, place the coupler sleeve over the valve stem such that the ball bearings are aligned with the receiver in the valve stem, and then release the sliding sleeve to allow the biased sleeve to move downward towards the valve stem to position the first inner diameter over the ball bearings to seat them in the receiver and lock the pump-head onto the valve stem. To release the pump-head, the use may simply grab the sliding sleeve and pull upward away from the valve stem, which moves the second inner diameter into position over the ball bearings, releasing the ball bearings and pulling the pump-head off of the valve stem in one motion. The sliding sleeve may be utilized in higher pressure situations in which the fluid pressures acting on the valve system are higher or in situations where the valve system is employed to transfer liquid, hazardous gases, or other high pressure or hazardous fluids.

### Method of Use

A method for using the valve system of the present disclosure may comprise the steps of: 1) providing a valve coupler having an inflation pin and a collar having at least one ball bearing inwardly biased by an elastic sleeve for attaching to a valve stem; 2) providing a vessel having a valve stem, the valve stem having a sealing member biased against a sealing ring and a valve cap having a pin passage for accepting the inflation pin and a concavity for seating the at least one ball bearing of the collar; 3) engaging the valve coupler with the valve stem such that the inflation pin passed through the pin passage and the sealing ring; 4) passing a sufficient volume of air through inflation pin into the valve base to inflate a pressurizable vessel; and 5) disengaging the valve coupler from the valve stem. In some embodiments, the step of engaging the valve coupler with the valve stem may be performed by aligning the collar with the valve cap and applying a linear, axial force to the coupler. In some embodiments, the force applied to the coupler must be in the direction of the valve stem and must be sufficient to move the at least one ball bearing past a lip of the valve cap and into the circular depression of the valve cap. In some embodiments, the force applied to the coupler must be sufficient to cause the inflation pin to insert through the sealing ring and disengage the sealing member from the sealing ring against the bias of the biasing member. In some embodiments, the force applied to the coupler may be applied with one hand. In some embodiments, the step of disengaging the coupler from the valve stem may be accomplished with two fingers.

A method for using the valve system of the present disclosure may comprise the steps of: 1) providing a valve coupler having an inflation pin and a collar having at least one ball bearing inwardly biased by an elastic sleeve for attaching to a valve stem; 2) providing a vessel having a valve stem, the valve stem having a first sealing member biased against a first seat creating a first seal and a second sealing member and a second seat creating a second seal, and a valve cap having a pin passage for accepting the inflation pin and a concavity for seating the at least one ball bearing of the collar; 3) engaging the valve coupler with the valve stem such that the inflation pin passed through the pin passage and a central passage in said first seat to displace said first sealing member opening the first seal, which in turn displaces the second sealing member from the second seat opening the second seal; 4) passing a sufficient volume of air through inflation pin into the valve base to inflate a pressurizable vessel; and 5) disengaging the valve coupler from the valve stem. In some embodiments, the step of engaging the valve coupler with the valve stem may be performed by aligning the collar with the valve cap and applying a linear, axial force to the coupler. In some embodiments, the force applied to the coupler must be in the direction of the valve stem and must be sufficient to move the at least one ball bearing past a lip of the valve cap and into the circular depression of the valve cap.

In methods for using the valve conversion system of the present invention may comprise the steps of: 1) coupling a valve stem adapter to the pre-existing valve stem attached to an inflatable vessel, for example, by threading the valve stem coupler to the exterior threading of the pre-existing valve stem; 2) providing a valve coupler having an inflation pin and a collar having at least one ball bearing inwardly biased by an elastic sleeve for attaching to the valve stem adapter, which includes a pin passage for accepting the inflation pin and a circular depression for seating the at least one ball bearing of the collar; 3) engaging the valve coupler with the valve stem adapter such that the inflation pin passed through the pin passage and the sealing ring and depresses the valve actuator of the pre-existing valve stem; 4) passing a sufficient volume of air through inflation pin through the pre-existing valve stem to inflate a pressurizable vessel; and 5) disengaging the valve coupler from the valve stem.

In some embodiments, at least one of the elastic or semi-rigid elements of the present invention-which may be subject to wear-may be easily replaced by disengaging (e.g., unthreading) at least one of the pin seat from the coupler housing, or the valve cap from the valve stem. In some embodiments, a user may easily replace the sealing ring(s) of the coupler housing by unthreading the pin seat from the coupler housing. In some embodiments, a user may easily replace at least one of the sealing member, the biasing member, and the sealing ring in the valve stem by unthreading the valve cap from the valve stem. In some embodiments, a user may easily replace the elastic sleeve while the valve coupler is not engaged with the valve stem. The pin seat and inflation pin can also be replaced by simple removal and replacement with replacement parts.

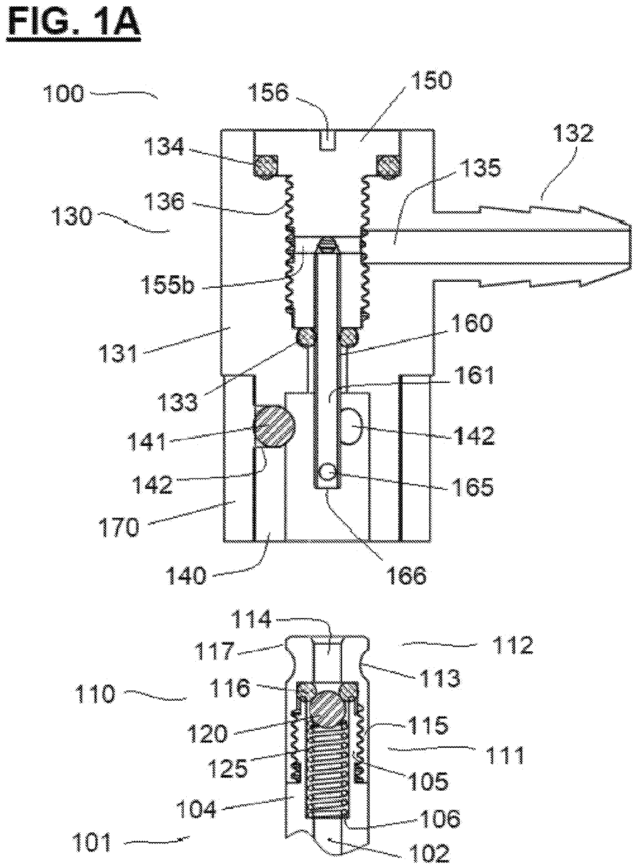

Embodiments of the present disclosure provided for a pneumatic valve system for easily attaching and sealing a valve coupler to a valve stem. As seen in FIGS. 1A-5B, the valve system 100 may comprise the following major components: a valve stem 101, a valve cap 110, a sealing member 120 biased by a biasing member 125, and a valve coupler 130 comprising a coupler housing 131, a pin seat 150, an inflation pin 160, and an elastic sleeve 170.

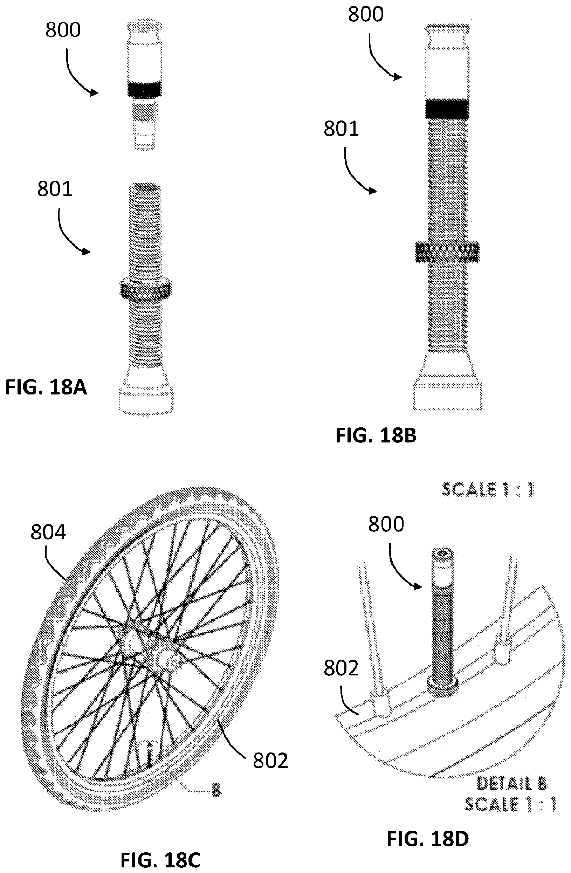

The valve stem 101 may be attached to and in fluid communication with a pressurizable vessel 199 (e.g., a bicycle inner tube or tubeless tire, see FIG. 18C). The valve stem 101 may act as an inlet and outlet for the vessel, and allow for easy and secure connection with the valve coupler 130, which may be in fluid communication with a pressurized air source (e.g., an air compressor, not shown), in order to pressurize the vessel 199. The valve stem 101 may comprise an airtight passage between the pressurizable vessel 199 and the valve cap 110. The valve stem 101 may comprise a tubular shape having a central passage 102, a first end 103 and a second end 104, the first end 103 comprising a base attached to the vessel 199, and the second end 104 may comprise an open end having a threading 105 with a shape complementary to the shape of a threading 115 of the valve cap 110.

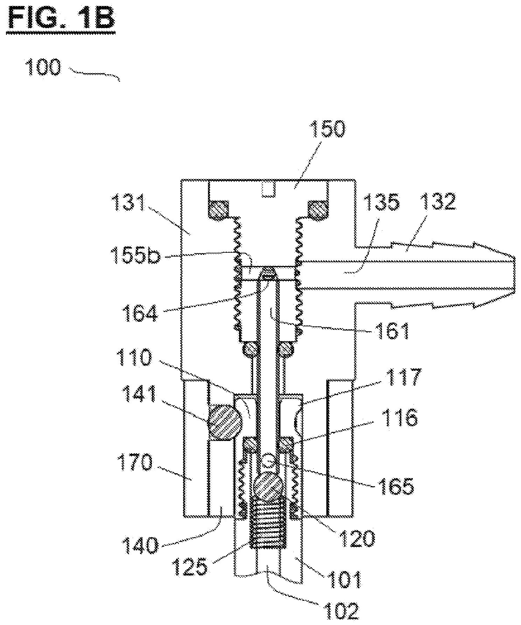

The second end 104 of the valve stem 101 may comprise a shoulder 106 on an inner surface thereof, the shoulder 106 being operable to provide a seat for supporting the biasing member 125 (e.g., a spring), the biasing member 125 providing an elastic force for biasing the sealing member 120 toward a sealed position (e.g., against a sealing ring 116 of the valve cap 110). The biasing member 125 may comprise a substantially cylindrical shape (e.g., an open coil shape) having an outer diameter complementary to an inner diameter of the second end 104 of the valve stem 101. The sealing member 120 may comprise a substantially spherical shape and the biasing member 125 may have an inner diameter smaller than an outer diameter of the sealing member 120, such that the sealing member 120 is operable to sit on or partly nest in a distal end 126 of the biasing member 125. The outer diameter of the sealing member 120 may be substantially smaller than an inner diameter of the central passage 102 of the valve stem 101, such that the sealing member 120 may move freely within the central passage 102 and air may pass around the sealing member 120 when the sealing member 120 is in an open position (e.g., not seated against the sealing ring 116 of the valve cap 110, see FIG. 1B).

The valve cap 110 may comprise a proximal end 111 and a distal end 112. The proximal end 111 may comprise a substantially cylindrical shape and an inner surface having a threading 115 complementary to the threading 105 of the second end 104 of the valve stem 101, allowing the proximal end 111 of the valve cap 110 to securely attach to the distal end 104 of the valve stem 101 in an air-tight manner. The distal end 112 of the valve cap 110 may comprise an outer surface having a rounded circumferential concavity 113 for removably attaching to the valve coupler 130, and a pin passage 114 substantially coaxial with the central passage 102 of the valve stem 101. The pin passage 114 may comprise a diameter complementary to a diameter of the inflation pin 160, such that the inflation pin 160 may pass through the pin passage 114 and into the central passage 102 of the valve stem 101.

The sealing ring 116 of the valve cap 110 may have a circular shape and a substantially circular or ovoid cross-sectional shape, and may comprise an elastomeric material. The sealing ring 116 may have an outer diameter complementary to an inner diameter of the valve cap 110, and the sealing ring 116 may have an inner diameter substantially smaller than an outer diameter of the sealing member 120, such that the sealing ring 116 may provide a stop against which the sealing member 120 is biased by the biasing member 125. When the valve stem 104 is not engaged with the valve coupler 130, contact between the sealing member 120 and sealing ring 116 forms an airtight seal against the air pressure in the vessel 119. An inner diameter of the sealing ring 116 may be less than or equal to an outer diameter of the inflation pin 160, such that inflation pin 160 may pass through the sealing ring 116 (which may deform or stretch slightly to allow passage of the inflation pin 160), forming an airtight seal between the inflation pin 160 and the sealing ring 116 against the air pressure inside the vessel 199.

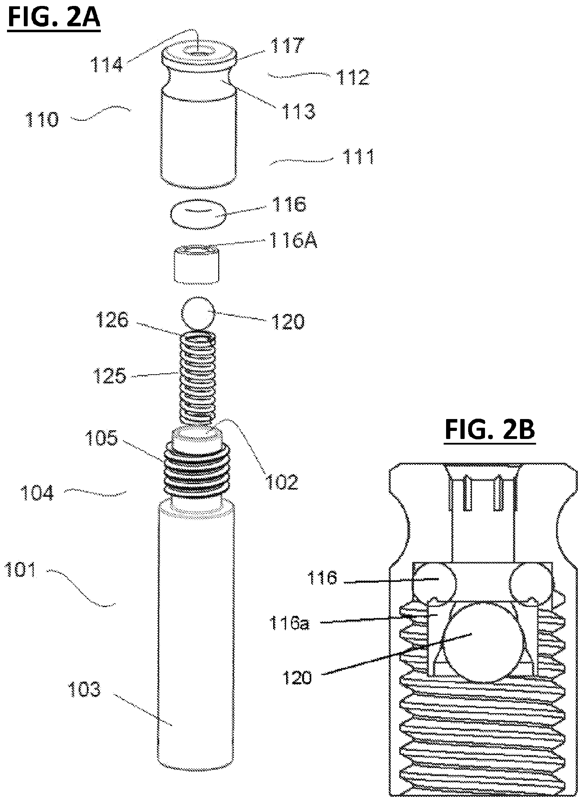

In other embodiments, the sealing member 120 may engage with a tri-point ball seat 116a to seal the valve cap 110. The tri-point seat 116a is composed of fused or integrally molded portions of two spherical caps, one having a cross-sectional area that is 10-15% larger than that of the sealing member 120 and the other spherical cap may have a cross-sectional that is 10-15% smaller than that of the sealing ball 221. The spherical caps may be axially aligned, with the smaller of the two caps position over the larger, with a passage in the smaller spherical cap to allow the passage of fluid through the valve cap. The tri-point seat may positioned in the valve cap 110 adjacent and just below the sealing ring 116 and may be supported at its inferior end by the internal shoulder created by the upper rim of threading 105, as shown in FIGS. 2B-2C. The tri-point seat 116a may be made from high tensile strength, high hardness metal.

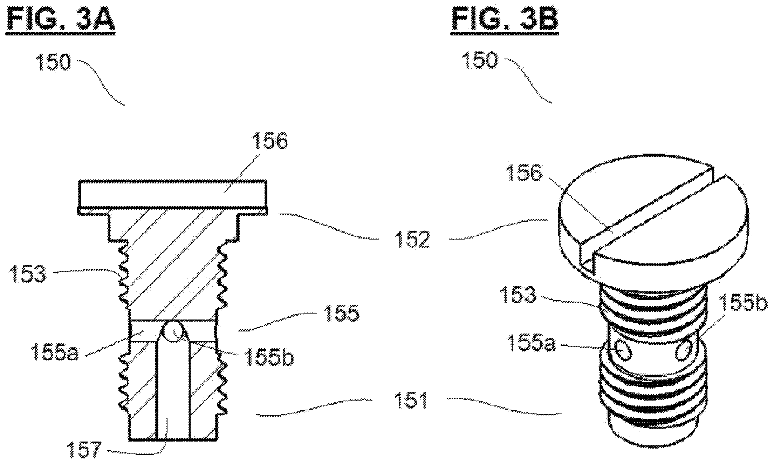

As best seen in FIGS. 3A and 3B, the pin seat 150 may comprise a proximal end 151 and a distal end 152, a threading 153 for attaching to the coupler housing 130, a pin receiver 154, and a connecting passage 155. The distal end 152 may comprise a substantially disc-shaped head having an outer diameter greater than an outer diameter of the proximal end 151, and a slot 156 having a substantially square cross section. The slot 156 may traverse the upper surface of the distal end 152 and may be positioned such that a longitudinal axis of the slot 152 is aligned in parallel with a first branch 155a of the connecting passage 155, and orthogonal to a second branch 155b of the connecting passage 155. Thus, a user may be able to determine the position of each of the first branch 155a and second branch 155b when the pin seat 150 is threaded into the coupler housing 131 by observing the position of the slot 156. The user may further be able to determine the position of the air inlet passage 135 of the coupler housing 131 by observing the position of the air source attachment member 132, and align at least one of the first branch 155a and the second branch 155b with the air inlet passage 135 by aligning the slot 156 with (in parallel with or orthogonal to) the air source attachment member 132. Fluid communication may thus be achieved from the air source (not shown), through the air source attachment member 132 and the air passage 135, through the connecting passage 155, and into the central passage 161 of the inflation pin 160 (and subsequently into the valve stem 101 when the valve coupler 131 is engaged therewith). In some embodiments, the coupler housing 131 may have a space around the connecting passage, such that each of the branches of the connection passage are in fluid communication with the air inlet passage 135.

The proximal end 151 of the pin seat 150 may comprise a pin receiver 157, the pin receiver 157 comprising a passage substantially co-axial with a central axis of the coupler housing 131 and with the central passage 102 of the valve stem 101. The pin receiver 157 may be operable to receive a first end 162 of the inflation pin 160, the pin receiver 157 having an inner diameter complementary to an outer diameter of the inflation pin 160. Along with a sealing ring 133 of the coupler housing 131, the pin receiver 157 may be operable to hold the inflation pin 160 in a substantially static manner when the first end 162 thereof is engaged with (e.g., inserted into) the pin receiver 157.

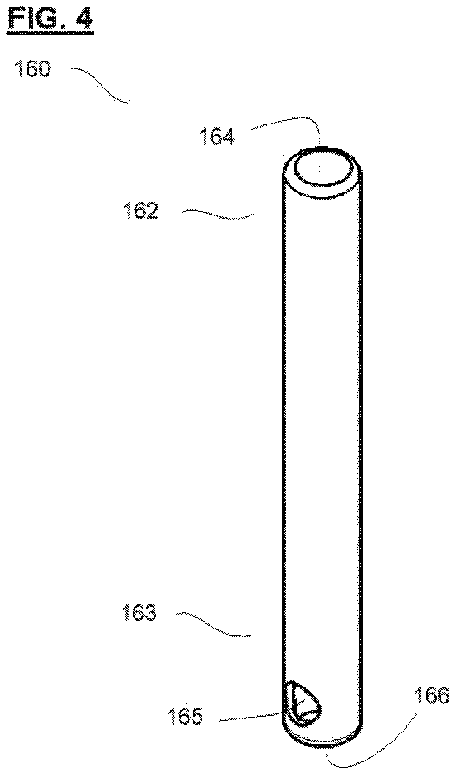

As best seen in FIG. 4, the inflation pin 160 may comprise a substantially cylindrical shape defining a central passage 161, the central passage 161 having an inlet 164 at a proximal end 162 of the inflation pin 160, and an outlet 165 at a distal end 163 of the inflation pin 160. The proximal end 162 may be operable to be inserted into the pin receiver 157 of the pin seat 150 and may be in fluid communication with the connecting passage 155. When engaging the valve coupler 130 with the valve stem 101, the second end 163 of the inflation pin 160 may be operable to be inserted into and to pass through the pin passage 114 of the valve cap 110, and may thereby pass into the central passage 102 of the valve stem 101. The outlet 165 may be arranged on a lateral outer surface of the distal end 163, rather than on a leading surface 166, the leading surface 166 therefore being free to contact and push the sealing member 120 away from the sealing ring 116 as the inflation pin 160 enters the valve stem 101, without blocking an air flow out of the outlet 165.

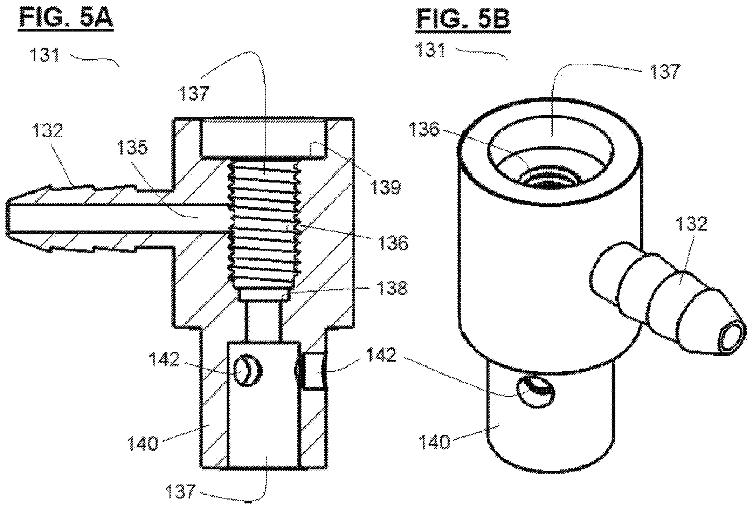

The coupler housing 131 of the valve coupler 130 may comprise an air source attachment member 132, a threading 136 for attaching to the pin seat 150, and a collar 140 for attaching to the valve cap 110. The coupler housing 131 may comprise a rigid material (i.e., a metal, a metal alloy, a plastic, a carbon fiber, and the like) and a generally cylindrical shape (see FIG. 5B) having a central passage 137 which is substantially co-axial with the central passage 102 of the valve stem 101 when the valve coupler 130 is engaged with the valve stem 101. The central passage 137 of the coupler housing 131 may have an inner surface having a threading 136 for securing the pin seat 150 in place in the central passage 137. The coupler housing 131 may comprise a first sealing ring 133 and a second sealing ring 134, the first sealing ring 133 being positioned to create an airtight seal between the distal end 151 of the pin seat 150 and a first shoulder 138 of the coupler housing 131 when the pin seat 150 is threaded into the coupler housing 131. The second sealing ring 134 may be positioned to create an airtight seal between the proximal end 152 of the pin seat 150 and a second shoulder 139 of the coupler housing 131.

The air source attachment member 132 may comprise a plurality of outer circumferential barbs, and may be operable to be inserted into a central passage of a pneumatic hose (not shown). The central passage of the pneumatic hose may be substantially elastic and operable to create an airtight connection with the plurality of barbs of the air source attachment member 132.

The valve coupler 130 may comprise a plurality of ball bearings 141 nested in a plurality of passages 142 traversing the wall of the collar 140, each of the plurality of ball bearings 141 being inwardly biased by the elastic bearing sleeve 170 enveloping the collar 140. The plurality of passages 142 in the wall of the collar 140 may comprise an outer end which defines an opening in an outer surface of the collar 140, and an inner end which defines an opening in an inner surface of the collar 140 (see FIG. 5A). Each passage 142 may comprise a substantially cylindrical shape except that the inner end is narrowed in comparison to the rest of the passage (i.e., the inner end has a smaller diameter than the rest of the passage). Each ball bearing 141 may have an outer diameter substantially greater than a diameter of the inner end of the passage 142, and substantially greater than the thickness of the wall of the collar 140 (see FIG. 1A), such that the ball bearing 141 cannot pass completely through the passage 142, but a portion of the ball bearing 141 may protrude through the narrowed end of the passage 142. Because the ball bearing 141 is wider than the wall of the collar 140, the elastic sleeve 170 will contact and elastically bias the ball bearing 141 toward the inner end of the passage 142. The ball bearing 142 may thus extend into the circumferential concavity 113 of the valve cap 110 when the valve coupler 130 is engaged with the valve stem 101 (see FIG. 1B), securing the valve coupler 130 in place on the valve stem 101.

The valve coupler 130 may be engaged with the valve stem 101 by simply aligning the collar 140 with the valve cap 110 and applying linear force against the valve coupler (toward the valve stem) with one hand. As seen in FIG. 1B, this action may cause the collar 140 to slide down over and engage with the valve cap 110. The force applied against the valve coupler 130 must be sufficient to: 1) cause the ball bearings 141 of the collar 140 to move outwardly against the inward force of the elastic sleeve 170 in order to slide over an upper lip 117 of the valve cap 110 before moving back inwardly into the circumferential concavity 113, and 2) cause the second end 163 of the inflation pin 160 to insert through the center of the sealing ring 116 and disengage the sealing member 120 from the sealing ring 116 against the force of the biasing member 125, such that the outlet 165 of the inflation pin 160 moves past the sealing ring 116 and into the fluid communication with the central passage 102 of the valve stem 101.

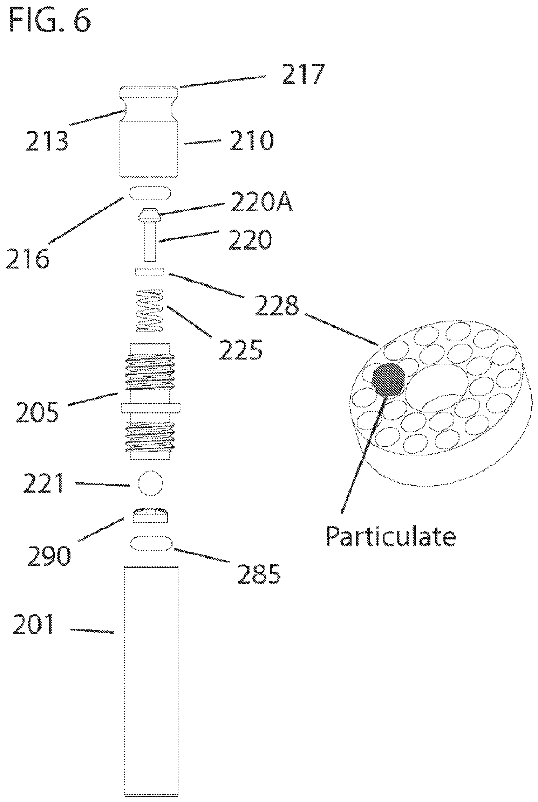

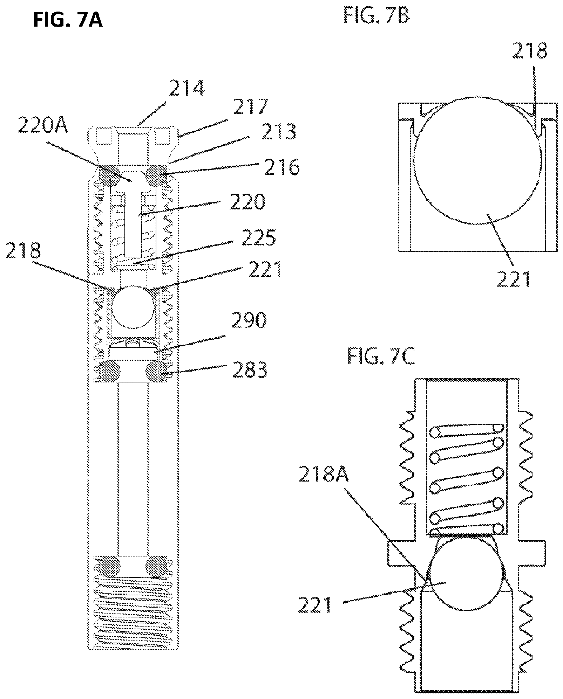

FIGS. 6-8 illustrate an additional embodiment of a pneumatic valve system for easily attaching and sealing a valve coupler to a valve stem that includes two independent seals. As seen in FIG. 6, the valve system 200 may comprise the following major components: a valve stem 201, a valve cap 210, a first chamber 281 that includes a first sealing member 220 biased by a biasing member 225, a second chamber 282 that includes a second sealing member 221, a dual -seal valve core 285 defining the connection between the two chambers 281 and 282, and a valve coupler 130 as described above, having a coupler housing 131, a pin seat 150, an inflation pin 160, and an elastic sleeve 170. The two independent sealing mechanisms in two separate chambers 281 and 282 eliminate the pressure loss that occurs in conventional valve designs when the pump-head is decoupled from the valve stem, which can be significant (e.g., up to 10 PSI (0,69 bar)). The upper chamber 281 may include a sealing ring 216 against which a first sealing member 220 is pressed when in a closed position, and the lower chamber 282 may include a sealing seat 286.

The first sealing member 220 may be a sealing rod having a tapering plug 220a at its upper end that engages with the sealing ring 216 when in a closed position. A biasing spring 225 may be positioned in the upper chamber 281 and engaged with the sealing rod 220 and may bias the sealing rod 220 toward the sealing member 216. The sealing rod 220 may be engaged with the biasing spring 225 by having a portion nested within the spring 225. The bottom end of the biasing spring 225 may be seated on a shoulder 206 of the dual - seal valve core 285 at the lower end of the first chamber 281. A filter 228 may be included in the upper chamber 281 that is operable to catch particulate matter and prevent the introduction of particulates into the valve stem 201 or an inflatable vessel to which it is attached. The particulate filter 228 may have a ring structure that is positioned around the shaft of the sealing rod 220 between the plug 220a and the biasing spring 225 such that it is maintained in a position adjacent to the plug 220a. The particulate filter 228 may be a metal mesh material or a perforated metal disk (e.g., laser-perforated stainless steel, aluminum, or other rigid material).

The valve cap 210 may comprise a lower end 211 and an upper end 212. The lower end 211 may comprise a substantially cylindrical shape and an inner surface having a threading 215 complementary to the threading 205 of the upper end 204 of a dual seal valve core that is positioned between the two chambers 281 and 282. stem 201, allowing the upper end 211 of the valve cap 210 to securely attach to the upper end 204a of the dual - seal valve core 285 in an air-tight manner. The upper end 212 of the valve cap 210 may comprise an outer surface having a rounded circumferential concavity 213 for removably attaching to the valve coupler 130, and a pin passage 214 substantially coaxial with the dual - seal valve core 285 and the valve stem 201. The pin passage 214 may comprise a diameter complementary to a diameter of the inflation pin 160, such that the inflation pin 160 may pass through the pin passage 214 and into the valve stem 201.

The sealing ring 216 of the valve cap 210 may have a circular shape and a substantially circular or ovoid cross-sectional shape, and may comprise an elastomeric material. The sealing ring 216 may have an outer diameter complementary to an inner diameter of the valve cap 210, and the sealing ring 216 may have an inner diameter substantially smaller than an outer diameter of the sealing plug 220a, such that the sealing ring 216 may provide a stop against which the sealing member 220 is biased by the biasing member 225. The sealing ring 216 may be positioned between the upper circumference of the dual-seal valve core 285 and a shoulder 212 of the valve cap 210. When the valve coupler 130 is not engaged with the valve cap 210, contact between the sealing plug 220a and sealing ring 216 forms an airtight seal against the air pressure in the vessel. An inner diameter of the sealing ring 216 may be less than or equal to an outer diameter of the inflation pin 160, such that inflation pin 160 may pass through the sealing ring 116 (which may deform or stretch slightly to allow passage of the inflation pin 160), forming an airtight seal between the inflation pin 160 and the sealing ring 216 against the air pressure inside the vessel.

The second chamber 282 may include a second sealing mechanism that includes a sealing member 221, which may be a substantially spherical rigid ball (e.g., stainless steel, aluminum, or other non-corrodible material) that engages with a complementary seat 218 that provides a relatively large surface area interface between the sealing member 221 and the complementary seat 218. The complementary seat 218 may have a spherical cap shape comprised of flexible thermoplastic, Buna-N Nitrile, gum rubber, Hypalon ^{™}, Neoprene ^{™}, polyurethane, SBR (red rubber), silicone, Viton ^{™}, fluorosilicone, ethylene propylene, butyl, or other materials. The material can be somewhat flexible such that it flexes when the sealing member 221 against the seat 218 by the internal pressure of the pressurized vessel. The second chamber 282 may or may not include a biasing member. The sealing member 221 in the second chamber 282 may be held in place in the seat 218 by the pneumatic pressure in the vessel to which the valve stem 201 is connected.

In other embodiments, the seat 218 may be a tri-point ball seat 218a. The tri-point seat 218a is composed of fused or integrally molded portions of two spherical caps, one having a cross-sectional area that is 10-15% larger than that of the sealing ball 221 and the other spherical cap may have a cross-sectional that is 10-15% smaller than that of the sealing ball 221. The spherical caps may be axially aligned with the smaller of the two position over the larger, with a passage in the small spherical cap to allow the passage of air or other gases through the valve. The tri-point seat 218a may be made from high tensile strength, high hardness metal.

The seat 218 (or 218a) may be positioned on the inferior side of the shoulder 206 of the dual - seal valve core 285, within the second chamber 282. The dual seal valve core 285 may be positioned between the inferior portion of the valve cap 210 and the upper portion of the valve stem 201 by threaded or other mechanical connections. The dual - seal valve core 285 may include a lower threaded portion 285b that connects to threaded receiver 205 in the upper portion of the valve stem 201. The threaded receiver 205 may have a shape complementary to the shape of lower threaded portion 285b. The valve stem 201 may be attached to and in fluid communication with a pressurizable vessel (e.g., a bicycle tire tube), and may act as an inlet and outlet for the vessel.

A gasket 283 may be positioned between the lower threaded portion 285b and a shoulder 203 at the lower aspect of threaded receiver of the valve stem 201. A washer 290 may positioned over the gasket 283. The washer 290 may prevent the sealing member 221 from seating in the lower passage of the second chamber during inflation. This "stand-off" washer 290 may be a cage-like structure or may have leaf-like projections that allow the passage of air or other inflation gas around the washer 290 when the sealing member 221 is in contact with the washer 290. The washer 290 may have an outer diameter substantially equal to the inner diameter of the lower threaded portion 285b of the dual-seal valve core 285, such that the washer may be maintained in position over the gasket 283.

The valve coupler 130 may be engaged with the valve cap 210 by simply aligning the collar 140 with the valve cap 210 and applying linear force against the valve coupler (toward the valve stem) with one hand. As seen in FIG. 8, this action may cause the collar 140 to slide down over and engage with the valve cap 210. The force applied against the valve coupler 130 must be sufficient to: 1) cause the ball bearings 141 of the collar 140 to move outwardly against the inward force of the elastic sleeve 170 in order to slide over an upper lip 217 of the valve cap 210 before moving back inwardly into the circumferential concavity 213, 2) cause the second end 163 of the inflation pin 160 to insert through the center of the sealing ring 216 and disengage the sealing rod 220 from the sealing ring 216 against the force of the biasing member 225, such that the outlet 265 of the inflation pin 160 moves past the sealing ring 216 and into the fluid communication with the interior of the first chamber 281; and 3) cause the lower end of the sealing rod 220 to engage with the second sealing member 221 in the second chamber 282 and displace the second sealing member 221 from the seat 218 opening the second seal of the valve 200. Air or other gas may then flow through inflation needle 160 into the first chamber 281 and then through the passage between the first and second chambers and through the second chamber 282 to inflate the vessel. +

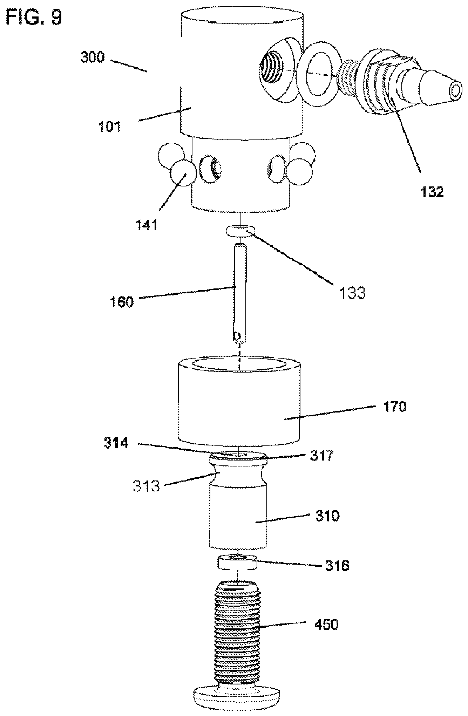

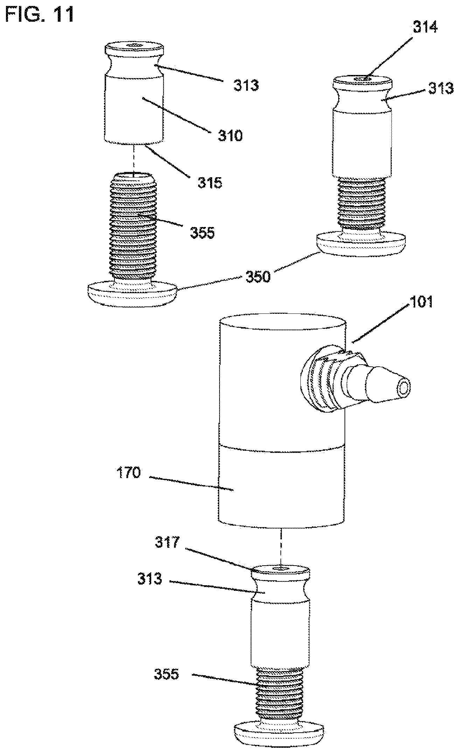

FIGS. 9-11 illustrate an additional embodiment of a pneumatic valve adapter system 300 for easily attaching and sealing a valve coupler 130 to a pre-existing valve stem 301 with an adapter device 310 attached thereto. The valve adapter system 300 is operable for use with existing pneumatic valve systems (e.g., a Schrader valve). As seen in FIG. _, the valve adapter system 300 may comprise the following major components: a valve stem adapter 310, a pin passage 314 for accepting an actuating pin from the pump-head assembly, sealing gasket 316, and a valve coupler 130 as described above, having a coupler housing 131, a pin seat 150, an inflation pin 160, and an elastic sleeve 170.

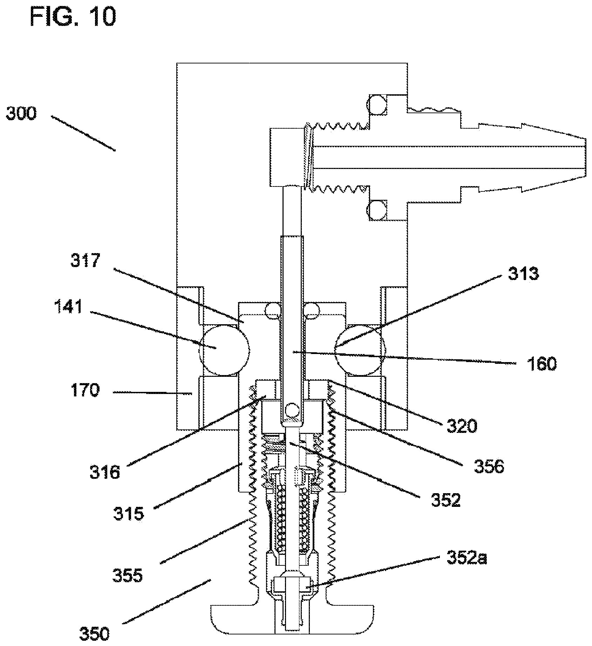

Conventional Schrader valves include an actuation pin that is pressed when a conventional pump-head is attached thereto. The movement of the actuation pin displaces a plug at the lower end of the actuation pin to open the valve. As shown in FIGS. 10-11, the adapter device 310 of the present invention has a threaded female receiver 315 that is complementary to the exterior male threading 355 of a conventional Schrader valve 350 and operable to securely threaded onto the Schrader valve stem 350 in an air-tight manner. A sealing gasket 316 may be positioned between an internal shoulder 320 of the adapter device 310 and the upper rim 356 of the Schrader valve stem. The sealing gasket 316 may have a circular shape, and may comprise an elastomeric material. The sealing gasket 316 may have an outer diameter complementary to an inner diameter of the adapter device 310 and an inner diameter less than or equal to an outer diameter of the inflation pin 160, such that inflation pin 160 may pass through the sealing gasket 316 (which may deform or stretch slightly to allow passage of the inflation pin 160), forming an airtight seal between the inflation pin 160 and the sealing gasket 316 against the air pressure inside a pneumatic vessel to which the Schrader valve 350 is attached.

The adapter device 310 may comprise an outer surface having a rounded circumferential concavity 313 for removably attaching to the valve coupler 130, and a pin passage 314 substantially coaxial with the actuator pin 352 of the Schrader valve stem 350. The pin passage 314 may comprise a diameter complementary to a diameter of the inflation pin 160, such that the inflation pin 160 may pass through the pin passage 314 and contact the actuator pin 352 of the Schrader valve stem 350.

The valve coupler 130 may be engaged with the adapter device 310 by simply aligning the collar 140 with the adapter device 310 and applying linear force against the valve coupler (toward the adapter device 310) with one hand. As shown in FIG. 10, this action may cause the collar 140 to slide down over and engage with the adapter device 310. The force applied against the valve coupler 130 must be sufficient to 1) cause the ball bearings 141 of the collar 140 to move outwardly against the inward force of the elastic sleeve 170 in order to slide over an upper lip 317 of the adapter device 310 before moving back inwardly into the circumferential concavity 313, and 2) cause the inflation pin 160 to insert through the center of the gasket 316 and displace the actuator pin 352 and a sealing plug 352a at its lower end to open the Schrader valve 350. Air or other gas may then flow through inflation needle 160 and then through the Schrader valve 350 to inflate the vessel.

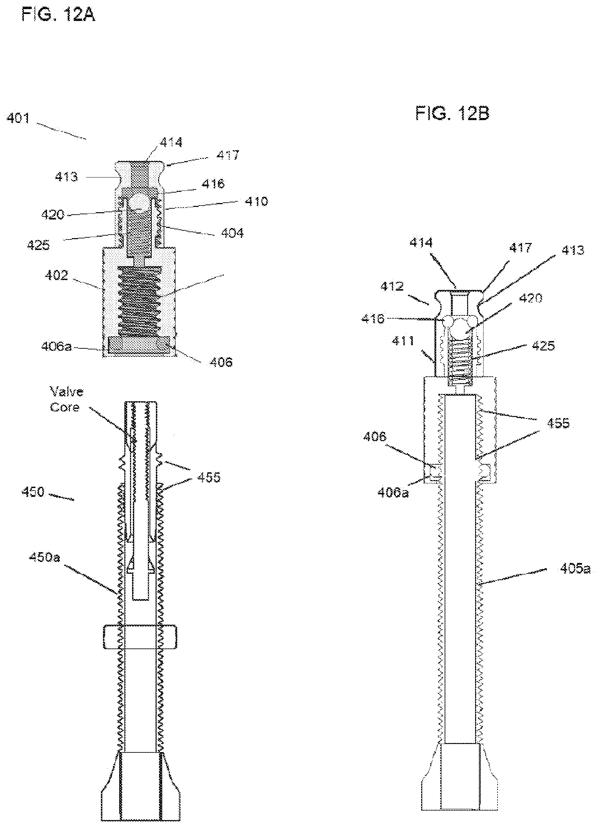

FIGS. 12A-13 illustrate an additional embodiment of a pneumatic valve adapter system 400 for easily attaching and sealing a valve coupler 130 to a pre-existing valve stem 401 with an adapter device 410 attached thereto. The valve adapter system 400 is operable for use with existing pneumatic valve systems (e.g., a Presta valve, Dunlop valve, or Schrader valve). As seen in FIG. _, the valve adapter system 400 may comprise the following major components: 1) a valve stem adapter 410 having a pin passage 414 for accepting an inflation pin 160 from the pump-head assembly 100, a sealing gasket 416, and 2) a pump-head 100 having a valve coupler 130 as described above with a coupler housing 131, a pin seat 150, an inflation pin 160, and an elastic sleeve 170.

The valve core of conventional valves (e.g., a Presta valve) can be removed, eliminating the valve actuation mechanism. An adapter device 401 may then be attached to the remaining stem of the conventional valve with valve mechanism according to the present invention. As shown in FIGS. 12A-12B, the adapter device 401 of the present invention may have a stem connector 402 that has a threaded female receiver 403 that is complementary to the exterior male threading 455 of a conventional valve 450 and operable to securely threaded onto the valve stem 450a in an air-tight manner. A sealing gasket 406 may be positioned between a recess 406a of the stem connector 402 and the outer diameter of the conventional valve stem 450a. The sealing gasket 406 may prevent pressured air from escaping from the valve adapter 401 during inflation or otherwise. The stem connector 402 also includes an upper male connector 404 that may connect to an adapter cap 410.

The adapter cap 410 may comprise a proximal end 411 and a distal end 412. The lower end 411 may comprise a substantially cylindrical shape and an inner surface having a threading 415 complementary to threading of the upper male connector 404 of the stem connector 402, allowing the lower end 411 of the adapter cap 410 to securely attach to the upper male connector 404 of the stem connector 401 in an air-tight manner.

The distal end 412 of the adapter cap 410 may comprise an outer surface having a rounded circumferential concavity 413 for removably attaching to the valve coupler 130, and a pin passage 414 substantially coaxial with the conventional valve stem 450. The pin passage 414 may comprise a diameter complementary to a diameter of the inflation pin 160, such that the inflation pin 160 may pass through the pin passage 414 and into the interior of the adapter cap. A sealing mechanism may be positioned between the upper male connector 404 and the adapter cap 410. The stem connector 401 has a shoulder 405 in the interior diameter of the upper male connector 404. A biasing member 425 (e.g., a spring) may be positioning within the male connector 404 with its lower end seated on shoulder 405. A sealing member 420 may be positioned above the biasing member 425 such that the biasing member biases the sealing member toward the pin passage 414 in adapter cap 410.

A sealing ring 416 of the valve cap 410 may have a circular shape and a substantially circular or ovoid cross-sectional shape, and may comprise an elastomeric material. The sealing ring 416 may have an outer diameter complementary to an inner diameter of the adapter cap 410, and the sealing ring 416 may have an inner diameter substantially smaller than an outer diameter of the sealing member 420, such that the sealing ring 416 may provide a stop against which the sealing member 420 is biased by the biasing member 425. When the adapter cap 410 is not engaged with the valve coupler 130, contact between the sealing member 420 and sealing ring 416 forms an airtight seal against the air pressure in a pneumatic vessel to which the valve stem 450 is attached. An inner diameter of the sealing ring 416 may be less than or equal to an outer diameter of the inflation pin 160, such that inflation pin 160 may pass through the sealing ring 416 (which may deform or stretch slightly to allow passage of the inflation pin 160), forming an airtight seal between the inflation pin 160 and the sealing ring 416 against the air pressure inside the pneumatic vessel.

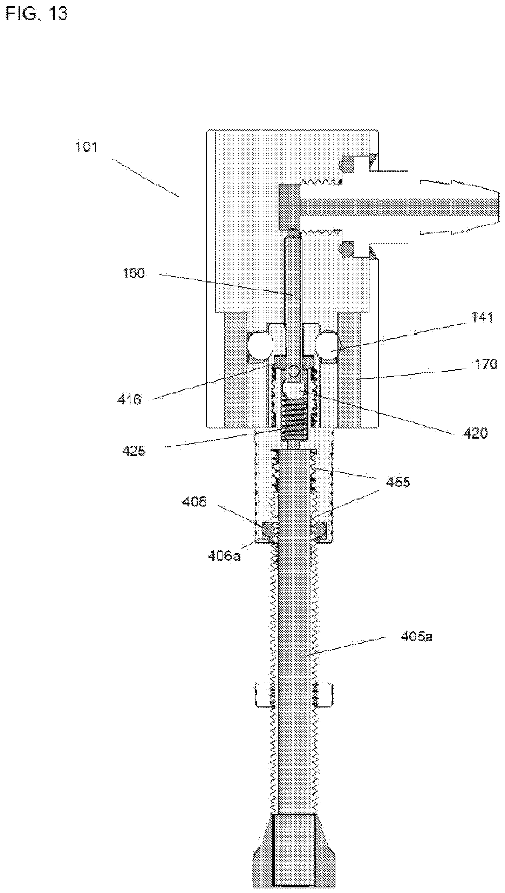

The valve coupler 130 may be engaged with the adapter device 410 by simply aligning the collar 140 with the adapter cap 410 and applying linear force against the valve coupler (toward the adapter cap 410) with one hand. As shown in FIG. 13, this action may cause the collar 140 to slide down over and engage with the adapter cap 410. The force applied against the valve coupler 130 must be sufficient to 1) cause the ball bearings 141 of the collar 140 to move outwardly against the inward force of the elastic sleeve 170 in order to slide over an upper lip 417 of the adapter cap 410 before moving back inwardly into the circumferential concavity 413, and 2) cause the inflation pin 160 to insert through the center of the sealing ring 416 and displace the sealing member 420 to open valve mechanism. Air or other gas may then flow through inflation needle 160 and then through the adapter device 401.

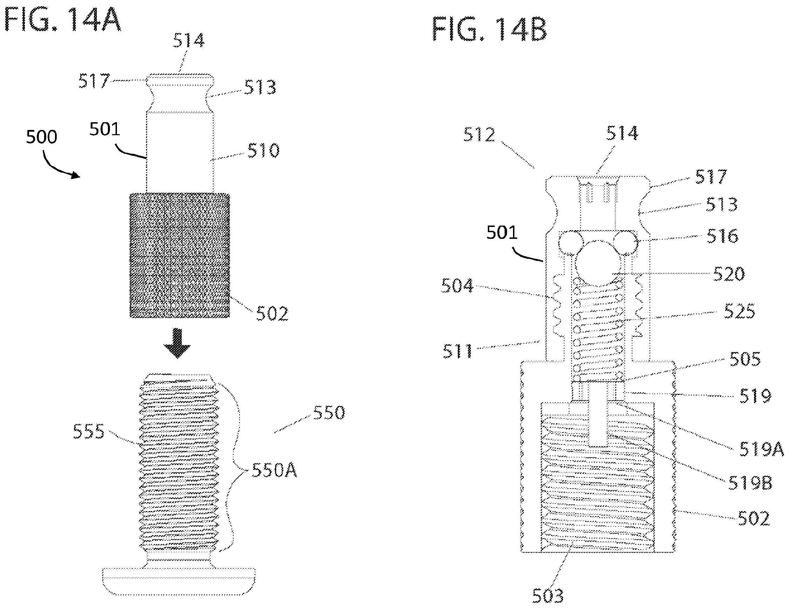

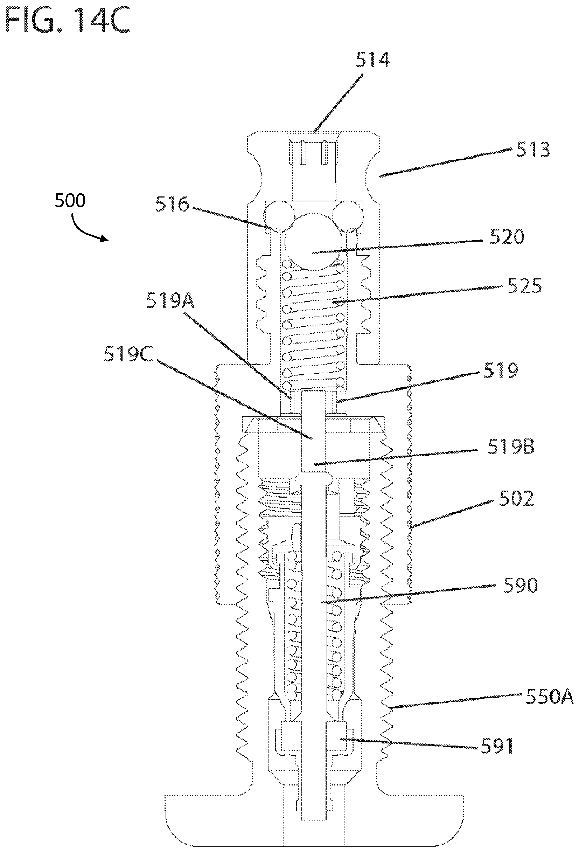

FIGS. 14A-15 illustrate an additional embodiment of a pneumatic valve adapter system 500 for easily attaching and sealing a valve coupler 130 to a pre-existing valve stem with an adapter device 510 attached thereto. The valve adapter system 500 is operable for use with existing pneumatic valve systems (e.g., a Schrader valve, Presta valve, and others). As seen in FIG. 14B, the valve adapter system 500 may comprise the following major components: 1) a valve stem adapter 501 having a pin passage 514 for accepting an inflation pin 560 from the pump-head assembly 100, a sealing gasket 516, and 2) a pump-head 100 having a valve coupler 130 as described above with a coupler housing 131, a pin seat 150, an inflation pin 160, and an elastic sleeve 170.

The adapter device 501 may include an engagement member 519 for engaging the actuation pin 590 of a conventional valve stem 550, which is operable to hold the conventional valve stem in an open position when the adapter device 501 is attached to the conventional valve stem 550. The valve mechanism of the adapter device 501 may then exclusively control the flow of fluid from the adapter device 501 to through the conventional valve stem 550. The engagement member may include an engagement plate 519a that substantially perpendicular to the path of fluid through the adapter device 501 and the engagement plate 519a may have perforations 519b therein for allowing the passage of fluid therethrough. The engagement plate 519 may also include an inferior protrusion that extend downward to meet an actuate an actuation pin 590 of the conventional valve stem 550. When the adapter device is attached to the pre-existing valve stem 550a, the actuation pin 590 is displaced inferiorly, thereby displacing plug 591 and allowing fluid to pass through the pre-existing valve stem 550.

The adapter device 501 may be attached to the conventional valve stem of the conventional valve with valve mechanism according to the present invention. As shown in FIGS. 14A-14B, the adapter device 501 of the present invention may have a stem connector 502 that has a threaded female receiver 503 that is complementary to the exterior male threading 555 of a conventional valve 550 and operable to securely threaded onto the valve stem 550a in an air-tight manner. A sealing gasket 506 may be positioned between a recess 506a of the stem connector 502 and the outer diameter of the conventional valve stem 550a. The sealing gasket 506 may prevent pressured air from escaping from the valve adapter 501 during inflation or otherwise. The stem connector 502 also includes an upper male connector 504 that may connect to an adapter cap 510.

The adapter cap 510 may comprise a proximal end 511 and a distal end 512. The lower end 511 may comprise a substantially cylindrical shape and an inner surface having a threading 515 complementary to threading of the upper male connector 504 of the stem connector 502, allowing the lower end 511 of the adapter cap 510 to securely attach to the upper male connector 504 of the stem connector 501 in an air-tight manner.

The distal end 512 of the adapter cap 510 may comprise an outer surface having a rounded circumferential concavity 513 for removably attaching to the valve coupler 130, and a pin passage 514 substantially coaxial with the conventional valve stem 550. The pin passage 514 may comprise a diameter complementary to a diameter of the inflation pin 160, such that the inflation pin 160 may pass through the pin passage 514 and into the interior of the adapter cap 510. A sealing mechanism may be positioned between the upper male connector 504 and the adapter cap 510. The stem connector 501 has a shoulder 505 in the interior diameter of the upper male connector 504. A biasing member 525 (e.g., a spring) may be positioning within the male connector 504 with its lower end seated on shoulder 505. A sealing member 520 may be positioned above the biasing member 525 such that the biasing member biases the sealing member toward the pin passage 514 in adapter cap 510.

A sealing ring 516 of the valve cap 510 may have a circular shape and a substantially circular or ovoid cross-sectional shape, and may comprise an elastomeric material. The sealing ring 516 may have an outer diameter complementary to an inner diameter of the adapter cap 510, and the sealing ring 516 may have an inner diameter substantially smaller than an outer diameter of the sealing member 520, such that the sealing ring 516 may provide a stop against which the sealing member 520 is biased by the biasing member 525. When the adapter cap 510 is not engaged with the valve coupler 130, contact between the sealing member 520 and sealing ring 516 forms an airtight seal against the air pressure in a pneumatic vessel to which the valve stem 550 is attached. An inner diameter of the sealing ring 516 may be less than or equal to an outer diameter of the inflation pin 160, such that inflation pin 160 may pass through the sealing ring 516 (which may deform or stretch slightly to allow passage of the inflation pin 160), forming an airtight seal between the inflation pin 160 and the sealing ring 516 against the air pressure inside the pneumatic vessel.

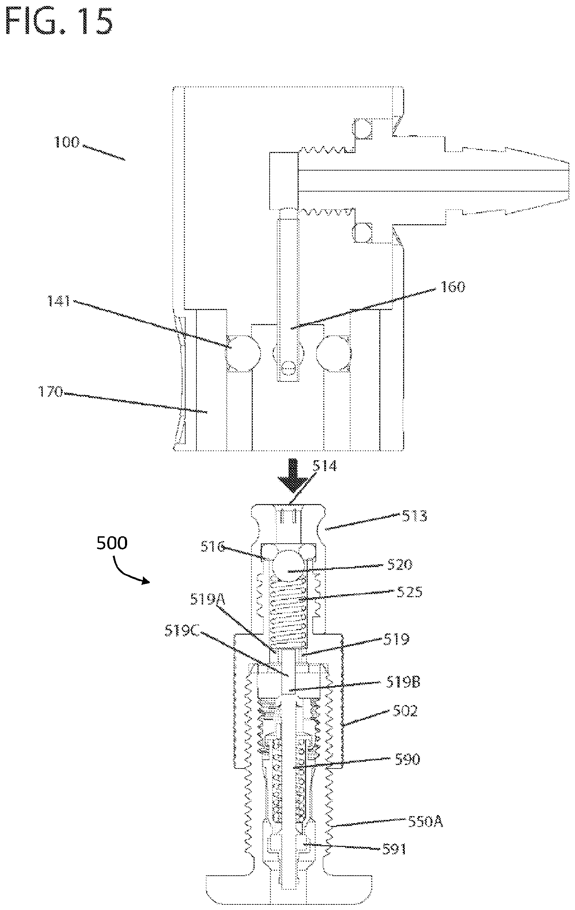

The valve coupler 130 may be engaged with the adapter device 510 by simply aligning the collar 140 with the adapter cap 510 and applying linear force against the valve coupler (toward the adapter cap 510) with one hand. As shown in FIG. 15, this action may cause the collar 140 to slide down over and engage with the adapter cap 510. The force applied against the valve coupler 130 must be sufficient to 1) cause the ball bearings 141 of the collar 140 to move outwardly against the inward force of the elastic sleeve 170 in order to slide over an upper lip 517 of the adapter cap 510 before moving back inwardly into the circumferential concavity 513, and 2) cause the inflation pin 160 to insert through the center of the sealing ring 516 and displace the sealing member 520 to open valve mechanism. Air or other gas may then flow through inflation needle 160 into the adapter device 501, through the perforations 519a of the engagement plate 519, and then through the pre-existing valve stem 550a.

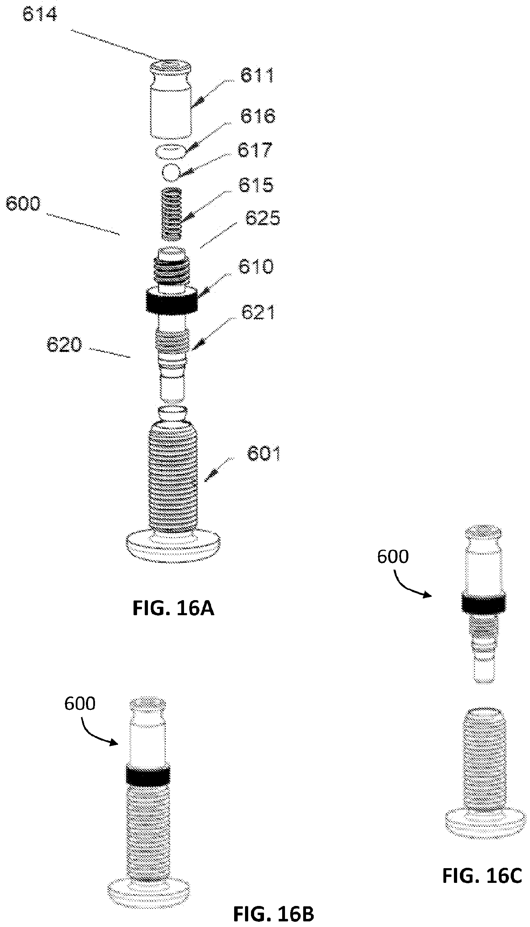

FIG. 16A-16C illustrate an additional embodiment of a pneumatic valve adapter system 600 operable to replace the valve core of a pre-existing valve stem 601 with a replacement core 610 that can be inserted into a conventional valve stem (e.g., a Schrader valve stem) after the core valve structure of the convention valve stem 601 is removed. A sealing gasket may prevent pressured air from escaping from the valve adapter connection with valve stem 601 during inflation or otherwise. The valve adapter system 600 is operable for use with existing pneumatic valve systems (e.g., a Schrader valve, and others). As seen in FIG. 16A, the valve adapter system 600 may comprise the following major components: 1) a valve stem adapter 600 having replacement core 610 that can be inserted and secured (e.g., by threaded connection) into the valve stem 601 in an airtight manner, a valve cap 611 connected to the replacement core 610 and having a pin passage 614 for accepting an inflation pin 160 from the pump-head assembly 100, a sealing gasket 616, and 2) a pump-head 100 having a valve coupler 130 as described above with a coupler housing 131, a pin seat 150, an inflation pin 160, and an elastic sleeve 170 as discussed above.

The replacement core 610 may comprise a distal male connector 625 for engaging with the valve cap 611 and a proximal male connector 620 for engaging with the valve stem 601. The proximal, lower end 620 may comprise a substantially cylindrical shape and an outer surface having a threading 621 complementary to threading in the valve stem 601, allowing the proximal end 620 to reversibly engage with the valve stem 601. The distal, upper end 625 having a male insertion end for engagement with the interior female receiver of the valve cap 611.

The valve mechanism of the valve stem adapter 600 may then exclusively control the flow of fluid from the valve stem adapter 600 through the conventional valve stem 601. The pin passage 614 may comprise a diameter complementary to a diameter of the inflation pin 160, such that the inflation pin 160 may pass through the pin passage 614 and into the interior of the adapter cap 611. A sealing mechanism may be positioned between the replacement core 610 and the cap 611. A biasing member 615 (e.g., a spring) may be positioning within the replacement core 610 with its lower end seated within the replacement core 610. A sealing member 617 may be positioned above the biasing member 615 such that the biasing member biases the sealing member 617 toward the pin passage 614 in cap 611.

A sealing ring 616 of the valve cap 611 may have a circular shape and a substantially circular or ovoid cross-sectional shape, and may comprise an elastomeric material. The sealing ring 616 may have an outer diameter complementary to an inner diameter of the cap 611 and the sealing ring 616 may aid in creating an airtight seal between the replacement plug 610 and the cap 611. The sealing ring 616 may also have an inner diameter substantially smaller than an outer diameter of the sealing member 617, such that the sealing ring 616 may provide a stop against which the sealing member 617 is biased by the biasing member 615. When the cap 611 is not engaged with the valve coupler 130, contact between the sealing member 617 and sealing ring 616 forms an airtight seal against the air pressure in a pneumatic vessel to which the valve stem 601 is attached. An inner diameter of the sealing ring 616 may be less than or equal to an outer diameter of the inflation pin 160, such that inflation pin 160 may pass through the sealing ring 616 (which may deform or stretch slightly to allow passage of the inflation pin 160), forming an airtight seal between the inflation pin 160 and the sealing ring 616 against the air pressure inside the pneumatic vessel.

The adapter 600 of FIG. 16A-16C provides an air-tight passage, by use of a sheering gasket seal between the inner walls of the valve stem and the outer wall of the adapter, thru to the central passage of the valve adapter. It also provides a sealing system for the tire, a bicycle tire, vessel, gas-tight chamber or bladder through the sealing mechanism.

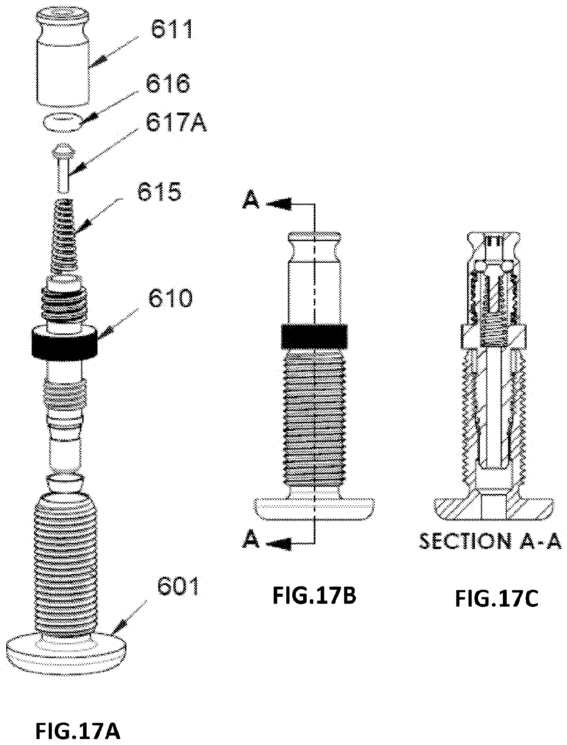

The adapter of FIG. 16a can alternatively have a sealing pin structure 617A that is nested in the biasing member 615 in place of a ball sealing member as shown in FIG. 17A - 17C.

The adapter of FIG. 16A can also be adapted to an adapter 800 configured to couple with a Presta-style valve 801 with a removed valve core, as shown in FIG. 18A-18B. This embodiment has a analogous structure to that adapter system 600, with the dimensions adjusted to fit on a conventional Presta valve stem. The valve 801 may be incorporated into a rim 802 of a bicycle tire 804 as shown in FIG. 18C and FIG. 18D.

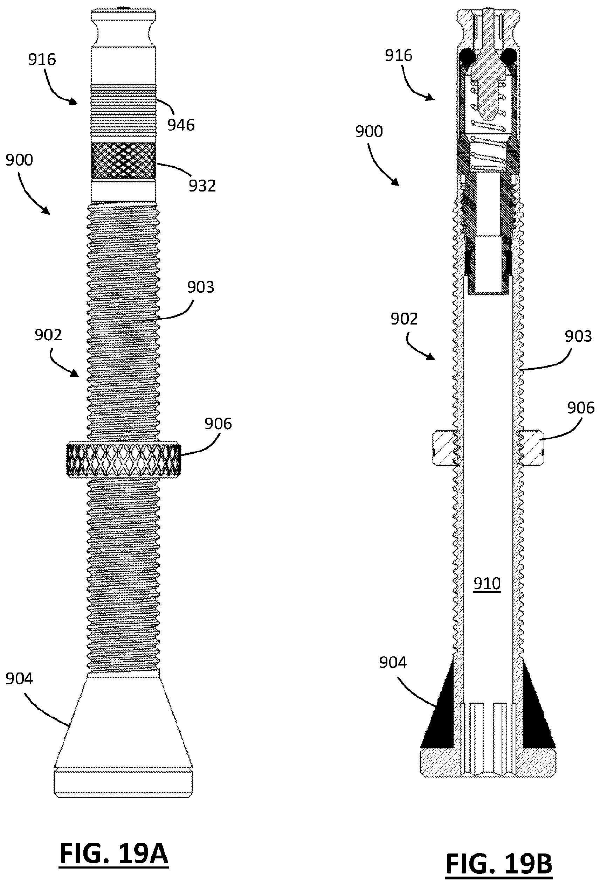

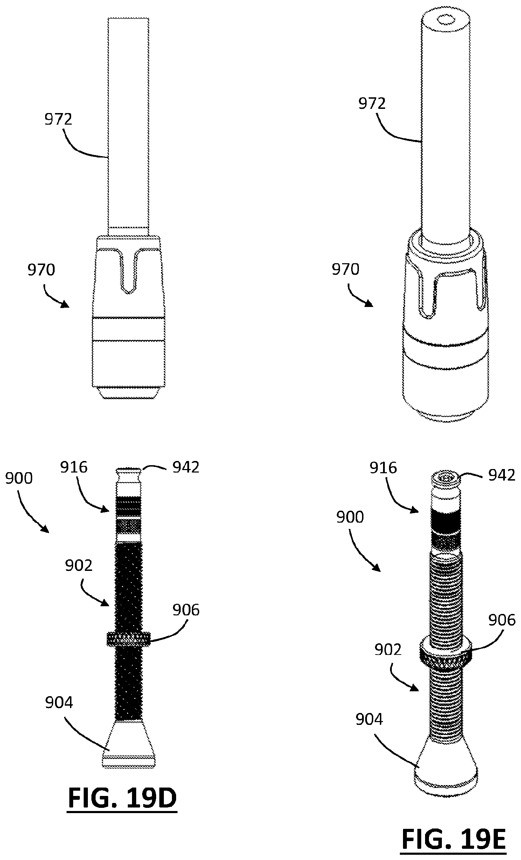

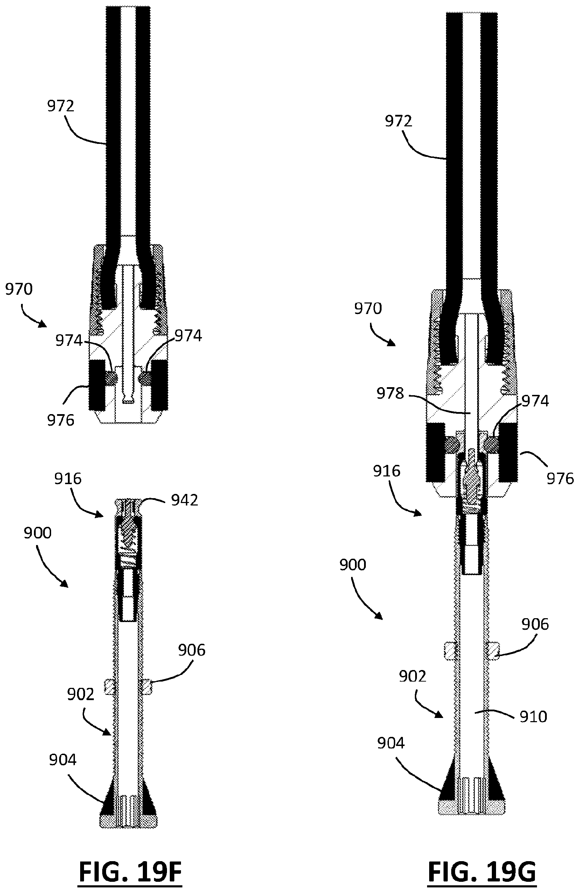

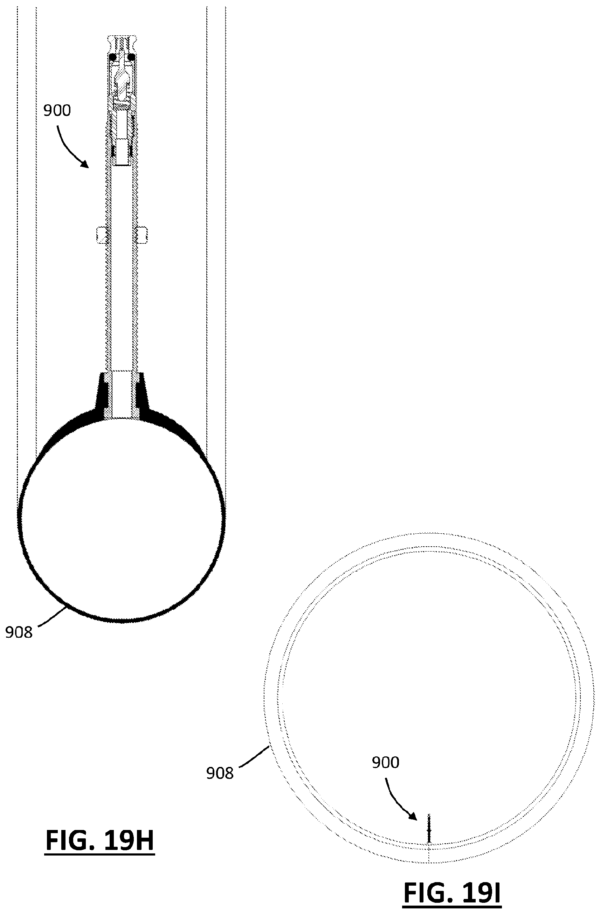

Referring now to FIG. 19A - 19I, an embodiment is shown of a valve 900. In this embodiment, the valve 900 includes a stem 902 having a rim gasket 904 disposed on one end. The stem 902 includes a fastener element, such as a thread 903 for example, that cooperates with a fastener 906. It should be appreciated the valve 900 shown in FIGS. 19A - 19G illustrate a valve for a tubeless tire where the fastener 906 engages the tire rim to compress the gasket 904 and seal the valve to the rim. In the embodiment of FIG. 19H and FIG. 19I, the valve 900 has been adapted to couple with an inner tube 908.

In the embodiment of FIGS. 19A - 19I, the valve stem 902 is a Presta-type valve with the core removed. This type of valve has a central passageway 910 that extends the length of the stem 902. As will be discussed in more detail, the central passageway 910 fluidly couples the pressure vessel (e.g. the inner tube 908 or the tubeless tire) to the pump head when the valve is opened. The Presta-type valve stem 902 includes an internal thread 912 on an end distal from the gasket 904. The valve stem 902 further includes a sealing surface 914 adjacent the thread 912 opposite an end 915 of the valve stem 902.

Coupled to the valve stem 902 is an valve core assembly 916 that allows a pump head, such as pump head 100 for example to be used with a Presta-type valve stem. The valve core assembly 916 includes a core body 918 that has a sealing portion 920, a stem coupling portion 922, intermediate portion 924 and a valve portion 926. The sealing portion 920 is positioned within the central passageway 910 adjacent the sealing surface 914. The sealing portion 920 includes a slot sized to receive a seal 928, such as a gasket made from PTFE for example. The seal 928 is disposed between the sealing portion 920 and the sealing surface 914 to form an air-tight seal between the central passageway 910 and the external environment. The sealing portion 920 includes an opening to a passage 921 on an end that provides fluid communication between the central passageway 910 and an end opening 917 of the valve core assembly 916.

The stem coupling portion 922 includes a fastener feature, such as a thread 930 that cooperates with the internal thread 912 to couple the core body 918 to the valve stem 902. At the transition of the stem coupling portion 922 and the intermediate portion 924 is a shoulder that engages the end 915 when the core body 918 is coupled to the valve stem 902. The intermediate portion 924 includes an outer diameter 932. In an embodiment, the outer diameter 932 is substantially the same size as the diameter of the end of the valve stem 902. In an embodiment, the outer diameter 932 includes a knurled surface feature that facilitates the coupling and rotating of the valve core assembly 916 to the valve stem 902 by the user.

It should be appreciated that the passage 921 extends through the valve coupling portion 922 and intermediate portion 924. In some embodiments, the diameter of the passage 921 may change along the length of the core body 918. For example, the diameter may be reduced in the area of threads 930 to provide an increased wall thickness. In an embodiment, the diameter of passage 921 is enlarged adjacent the transition from the valve coupling portion 922 and the intermediate portion 924 to define a shoulder 934. The shoulder 934 may support a biasing member, such as spring 936 for example. In an embodiment, the spring 936 may be a conical compression spring. It has been found that in some embodiments, the conical compression spring provides advantages in centering the sealing member 938.

In an embodiment, the passage 921 includes a portion 940 in the valve portion 926 that includes a larger diameter relative to an end opening 927 of the core body 918. It has been found that the enlargement of the diameter of portion 940 provides advantages in increasing air flow through the valve. As will be discussed in more detail herein, the enlargement of the portion 940 may be facilitated by using a press-fit coupling between the cap member 942 and the valve portion 926.

The cap member 942 is a generally cylindrical body that couples to the valve portion 926. In an embodiment, the cap member includes a thin walled portion 944 having an internal bore that fits over the valve portion 926. According to the invention, the internal bore is sized to provide a press-fit coupling of the cap member 942 to the valve portion 926. A channel 945 is formed on the on the core body on the outer diameter of the valve portion 926 adjacent the intermediate portion 924. In one embodiment, the wall 944 of cap member 942 may be crimped into channel 945. In another embodiment, the wall 944 may include a ridge that falls into this channel after it passes over the press fit area. In an embodiment, the channel 945 is arranged perpendicular to an axis the core body.

In an embodiment, the outer diameter of the thin walled portion 944 includes an optional plurality of concentric ring projections 946 or similar features (e.g. knurling or screw threads). It has been found that the forming of an element, such as the concentric rings for example, that increases the surface roughness of this portion of the valve core assembly 916 provides advantages in helping maintain backwards compatibility with prior art style pump-heads such as those designed to work with Presta (Sclaverand) valves. The additional concentric projections enable a better seal with and help retain the legacy pump heads (e.g. pump head -) on the valve core assembly 916 and avoids the "pop-off" issue described earlier herein with prior art pump head designs depending on the pressure levels within the pressure vessel. In another embodiment, the concentric projections or threads may be found on the valve core body 918, at or above the knurling point, instead of on the valve cap. If positioned on the valve core body, the valve cap may be shorter in length to allow for the concentric projections to be closer to the distal end of the valve core assembly.

The cap member 942 further includes a bore hole 948 that extends between the internal bore and the end opening 917. In an embodiment, the bore hole 948 may include features 950 that couple with a tool (e.g. a hexagonal or Allen wrench). The cap member 942 further includes a circumferential concavity 952 or slot, similar to concavity 113, that facilitates coupling of the valve core assembly 916 to the pump head. In some embodiments, the circumferential concavity may be rounded. In other embodiments, the concavity may have an angled wall or have a square shape.

Disposed between the end of the core body and an end of the internal bore of cap member 942 is a valve seat 954. The valve seat 954 has an inner diameter that is smaller than the diameter of the bore hole 948 and opening 927. The valve seat cooperates with sealing plug 938 to selectively allow fluid communication between the central passageway 910 and the end opening 917. The sealing plug 938 is biased against the valve seat 954 by the spring 936. In an embodiment, the sealing plug 938 includes a lower portion 956, a middle portion 958 and a pin portion 960. The lower portion 956 is sized to fit within the spring 936 which assists in maintaining an axial alignment of the sealing plug within the portion 940 and bore hole 948. The middle portion 958 may include a conical surface 962 that selectively engages the valve seat 954 under the biasing force of spring 936.

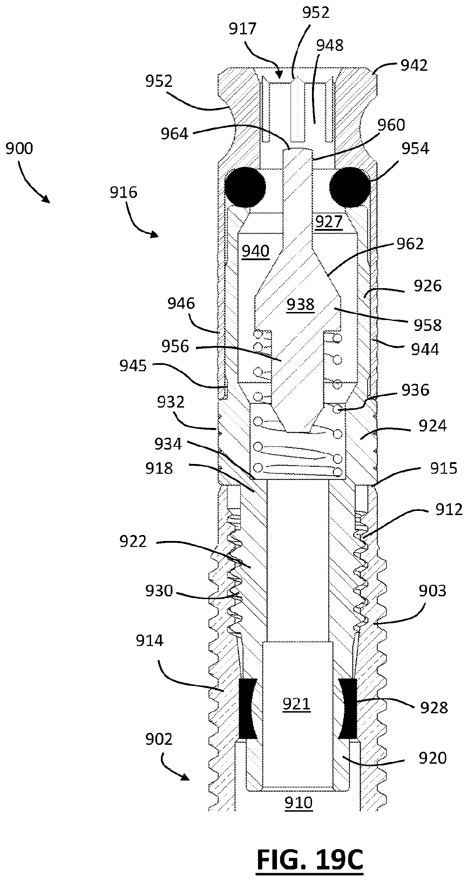

The pin portion 960 has a smaller diameter than the inner diameter of the valve seat 954. In an embodiment, when the sealing plug 938 is in the closed position, an end 964 (FIG. 19C) of the pin portion extends beyond or above the end of the cap member 942. Having the end 964 extending flush with or beyond the end of cap member 942 provides advantages in allowing the user to selectively release pressure from the pressure vessel such as with a fingernail for example.

Referring now to FIGS. 19D - 19G, an embodiment is shown for operating the valve 900. When a user desires to add pressurized air to the pressure vessel (e.g. inner tube 908), a pump head 970 is arranged over the cap member 942. Is should be appreciated that pump head 970 is constructed and operates in a substantially similar manner to pump head 100 described herein. In the embodiment of FIGS. 19D - 19G, the pump head 970 has the air supply tube 972 arranged to extend axially with the pump head. The pump head 970 includes a body that supports bearings 974 that are biased inwardly by an elastic sheath 976 in the same manner described herein with respect to pump heads 100, 300 for example.

With the pump head 970 aligned with the valve 900, the user simply pushes the pump head 970 onto the cap member 942 causing the bearings 974 to retract until they are aligned with the concavity 952, whereupon the bearings 974 under the biasing force of the elastic sheath 976 move back to engage the cap member (FIG. 19G). As the pump head 970 is pushed onto the cap member 942, an inflation pin 978 engages the pin portion 960 of the sealing plug 938 causing the sealing plug 938 to move axially and separate the conical surface 962 from the valve seat 954. With the sealing plug 938 separated from the valve seat 954, pressurized air may flow from the supply tube 972 through the valve core assembly 916, through the central passageway 910 and into the pressurized vessel.

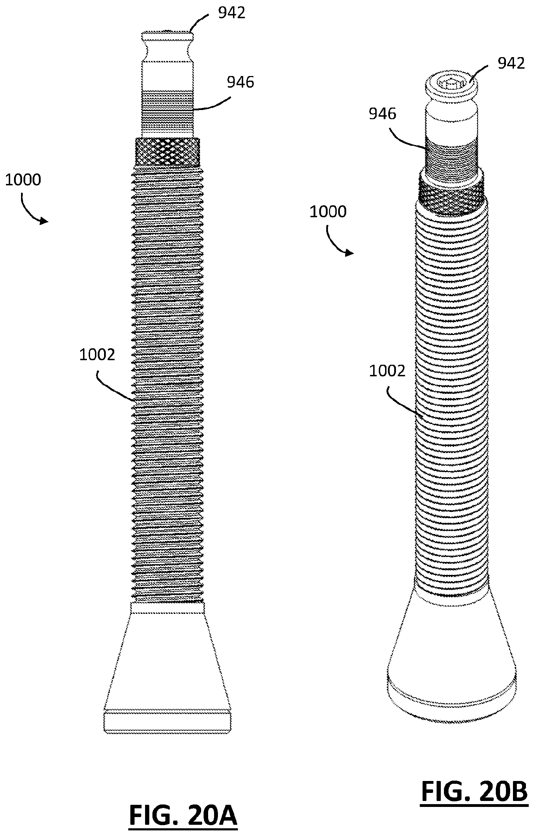

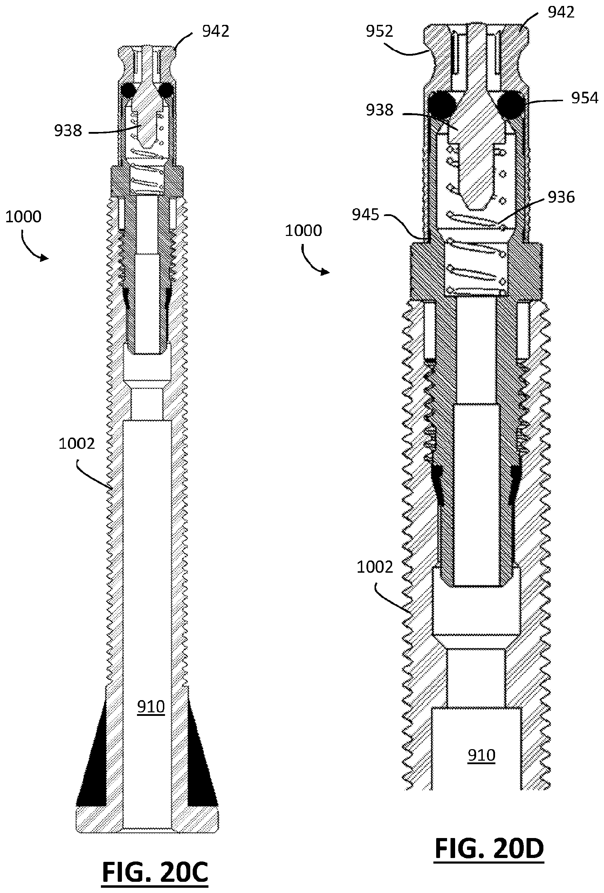

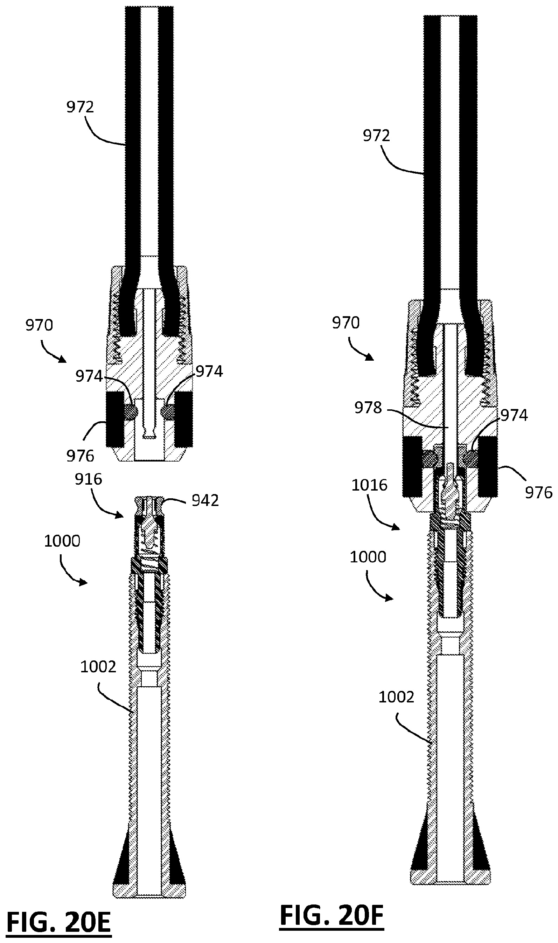

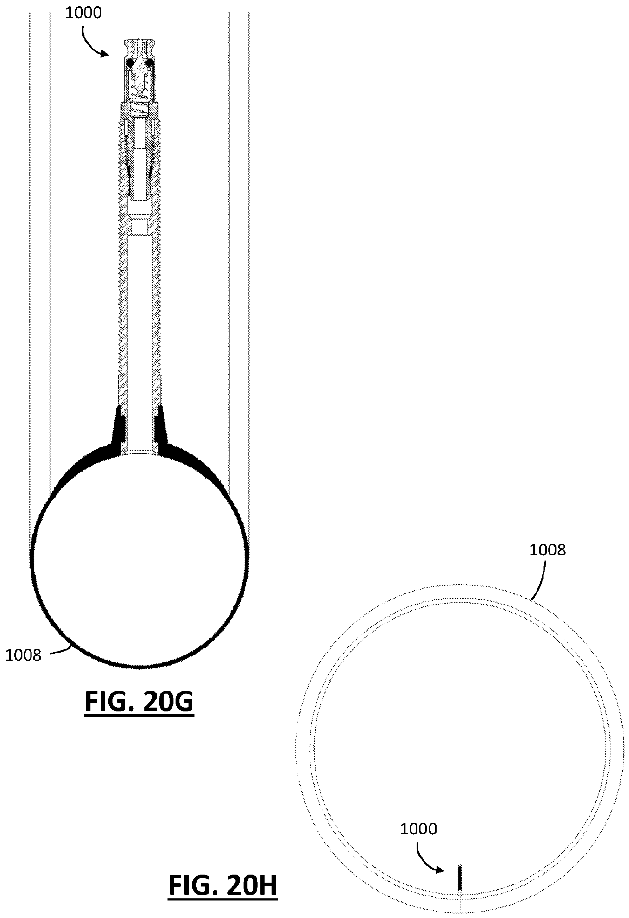

Referring now to FIGS. 20A - 20H, an embodiment of a valve 1000 is shown for use with a Schrader type valve stem. The valve 1000 is constructed similar to valve 900 with the core body 1018 being adapted to the configuration of the Schrader-type valve stem 1002. For conciseness, only the differences between the valve 900 and the valve 1000 will be described. In this embodiment, as best seen in FIG. 20D, the valve stem 1002 includes a central passageway 1010 that allows fluid communication with the pressure vessel, such as a tubeless tire or an inner-tube 1008 (FIG. 20G, FIG. 20H).

In this embodiment, the valve stem 1002 includes an internal fastener element adjacent an end opposite the rim gasket 904, such as threads 1012. Adjacent the threads is a tapered surface 1014. In this embodiment, the core body 1018 includes a complementary slot that receives a conical seal 1028. The core body 1018 includes fastening elements, such as threads 1030 that cooperate with the threads 1012 to couple the core body 1018 to the valve stem 1002. The rest of the core body 1018 is configured in the same manner as core body 918. It should be appreciated that core body 1018 may be dimensionally different than core body 918 to accommodate the Schrader configuration.

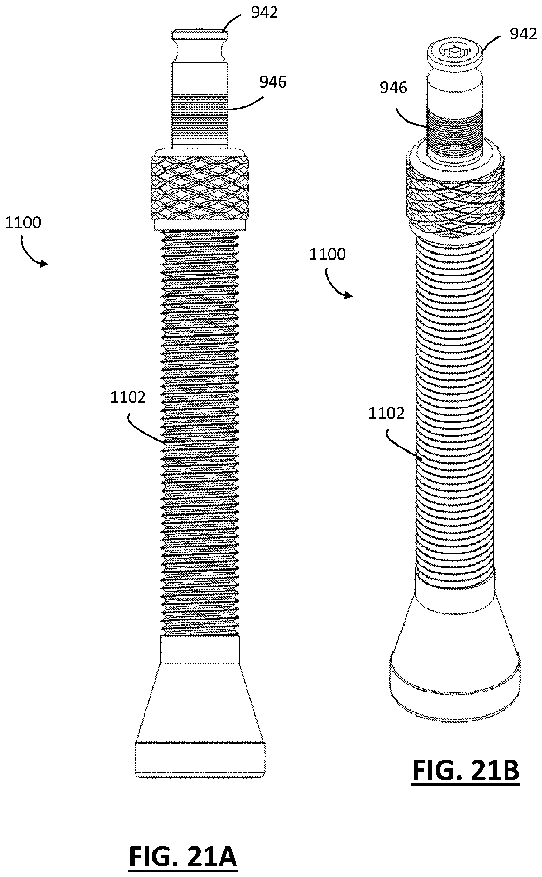

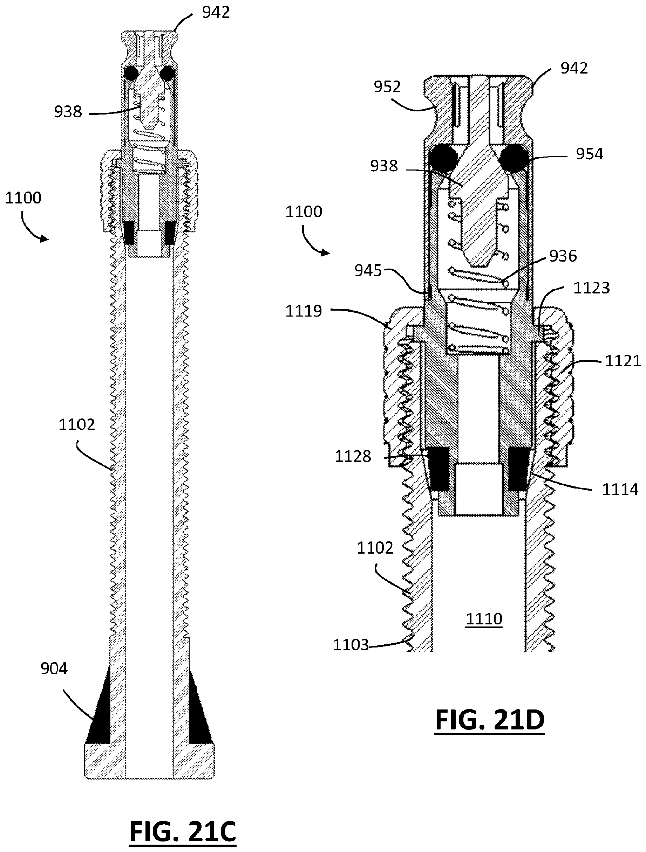

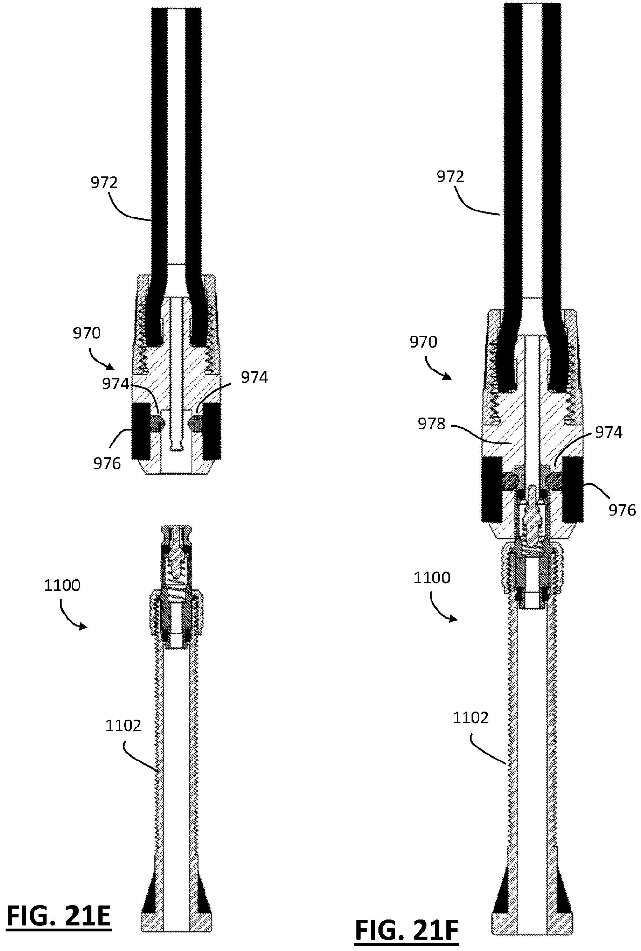

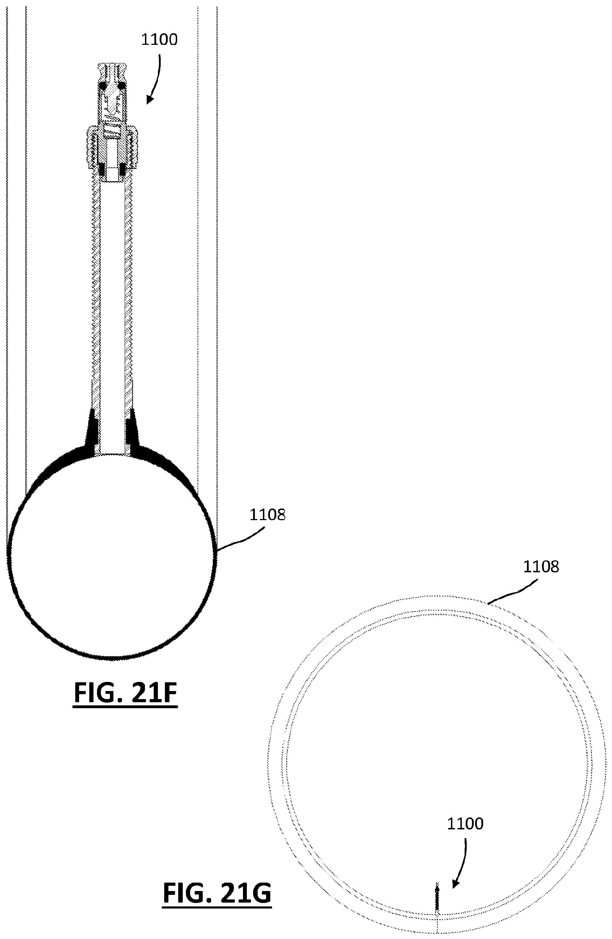

Referring now to FIGS. 21A - 20G, an embodiment of a valve 1100 is shown for use with a Dunlap type valve stem. The valve 1200 is constructed similar to valve 900 with the core body 1018 being adapted to the configuration of the Dunlap-type valve stem 1102. For conciseness, only the differences between the valve 900 and the valve 1100 will be described. In this embodiment, as best seen in FIG. 21D, the valve stem 1102 includes a central passageway 1110 that allows fluid communication with the pressure vessel, such as a tubeless tire or an inner-tube 1108 (FIG. 21F, FIG. 20G).

In this embodiment, the valve stem 1102 includes only an external fastening element 1103, such as thread. Within the central passageway 1110, a conical surface 1114 is provided adjacent an end opposite the rim gasket 904. In this embodiment, the core body 1018 includes a complementary slot that receives a conical seal 1128. The surface 1114 cooperates with the seal 1128 to provide an air-tight seal between the central passageway 1110 the environment. It should be appreciated that in this embodiment, since there are no internal fastening elements the core body 1118 simply rests in the central passageway 1110. In this embodiment, to secure the core body 1118 to the valve stem 1102, a collar 1119 is provided. The collar 1119 includes a hollow interior with fastening elements 1121 that engage with and cooperate with the fastening element 1103. The collar 1119 further includes co-axial opening that the core body 1018 extends through. The bottom of the interior portion engages a flange 1123 on the core body 1118 to capture and retain the core body 1118 on the valve stem 1102.

The rest of the core body 1018 is configured in the same manner as core body 918. It should be appreciated that core body 1018 may be dimensionally different than core body 918 to accommodate the Dunlap configuration. It should be appreciated that the valve 1100 may be used with a tubeless tire or with an inner tube 1108 (FIG. 21F, FIG. 21G).

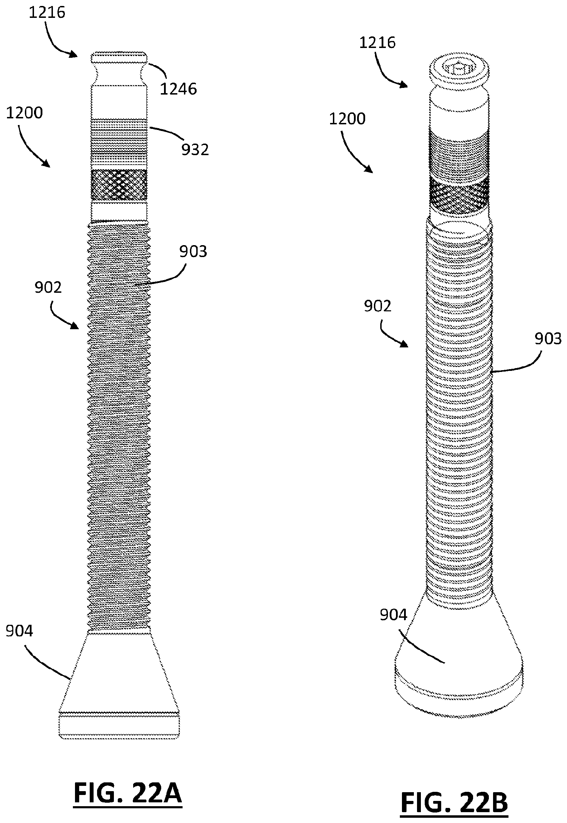

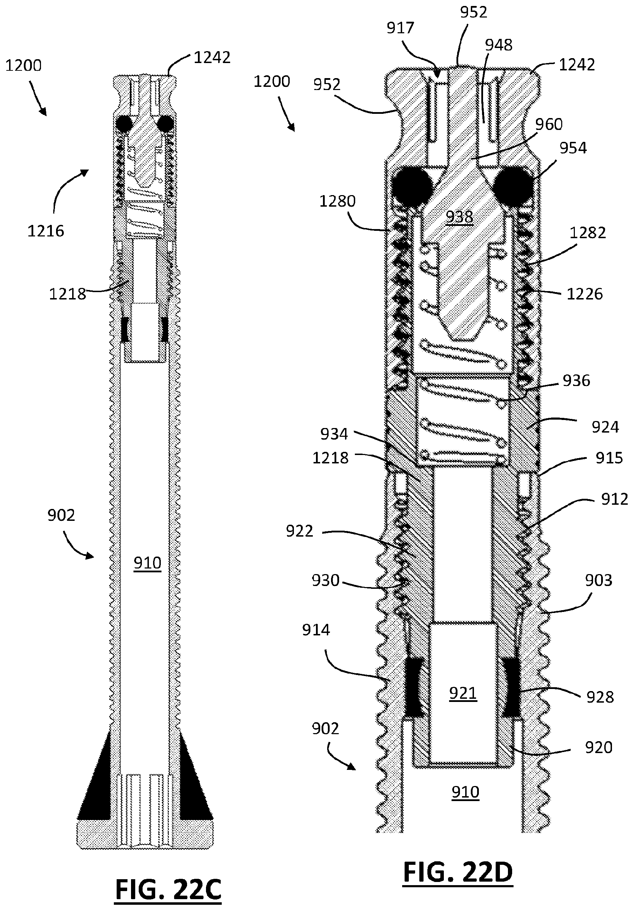

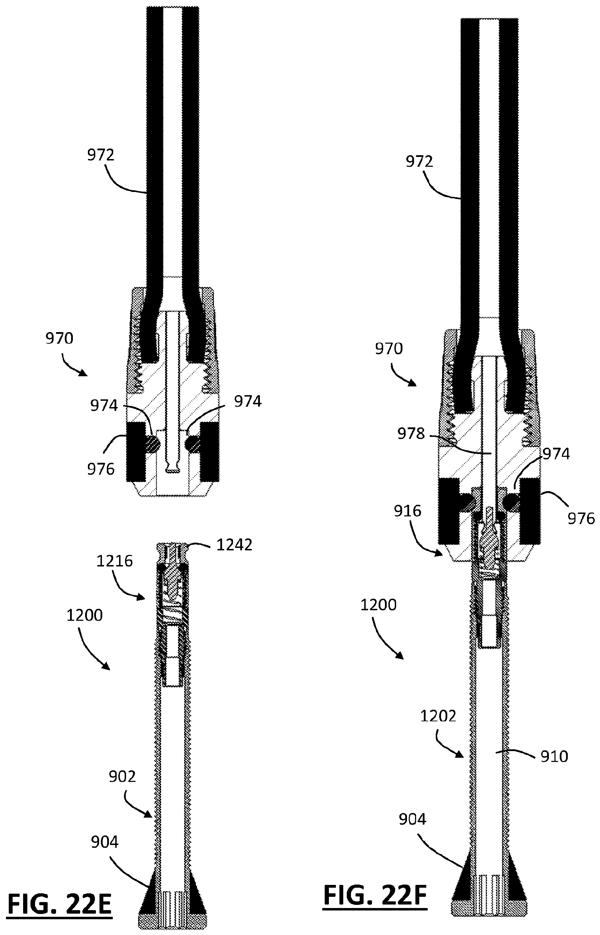

Referring now to FIGS. 22A - 22H, an embodiment is shown of a valve 1200 for a Presta-type valve stem that is similar to the valve 900. For conciseness, only the differences between the valve 900 and the valve 1200 will be described. In this embodiment, the difference between the valve 900 and the valve 1200 is that that valve core assembly 1216 includes a cap member 1246 and a core body 1218 that are coupled by a fastening element, such as a screw threads 1280, 1282 on the wall 1244 and the valve portion 1226 respectively.

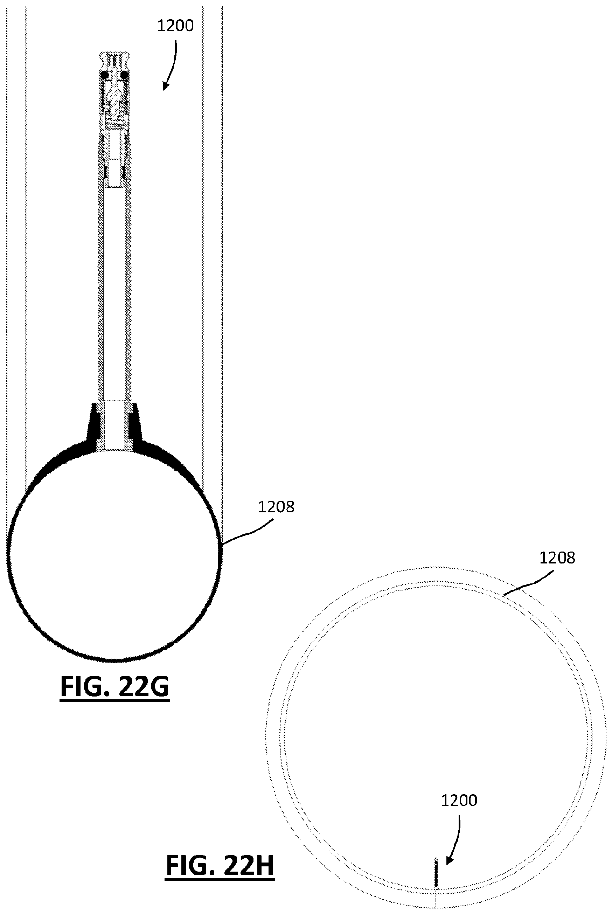

The rest of the core body 1218 is configured in the same manner as core body 918. Further, the other components, such as the sealing plug 938, the valve seat 954 and the biasing member 936 remain the same. It should be appreciated that the valve 1200 may be used with a tubeless tire or with an inner tube 1208 (FIG. 22G, FIG. 22H).

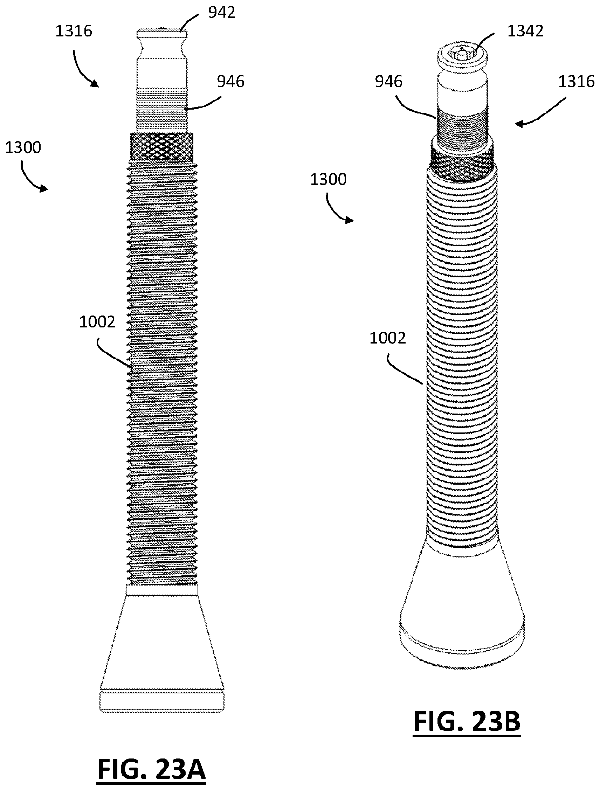

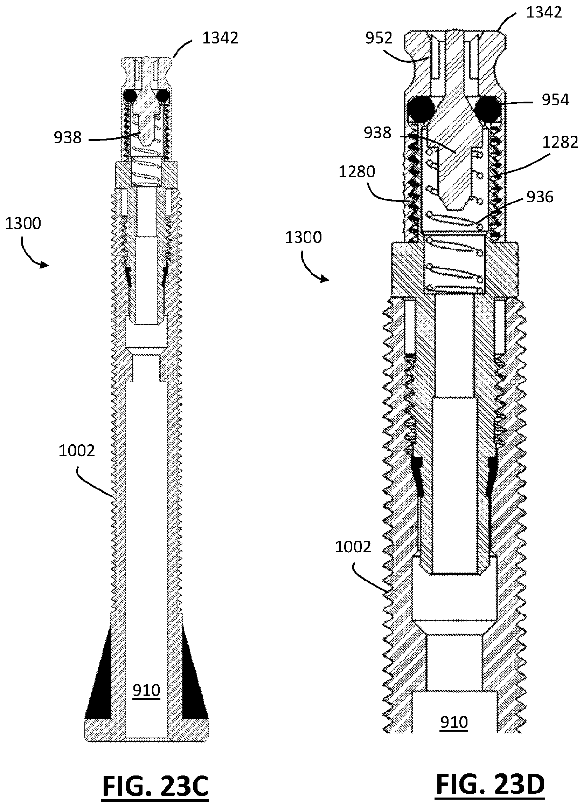

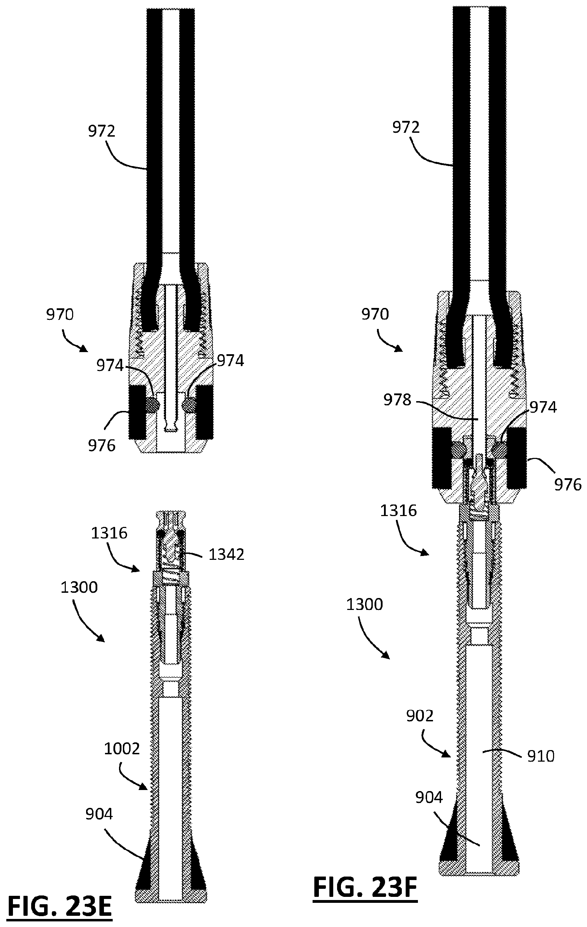

Referring now to FIGS. 23A - 22H, an embodiment is shown of a valve 1300 for a Schrader-type valve stem that is similar to the valve 1000. For conciseness, only the differences between the valve 1000 and the valve 1300 will be described. In this embodiment, the difference between the valve 1000 and the valve 1300 is that that valve core assembly 1316 includes a cap member 1346 and a core body 1318 that are coupled by a fastening element, such as a screw threads 1380, 1382 on the wall 1344 and the valve portion 1326 respectively.

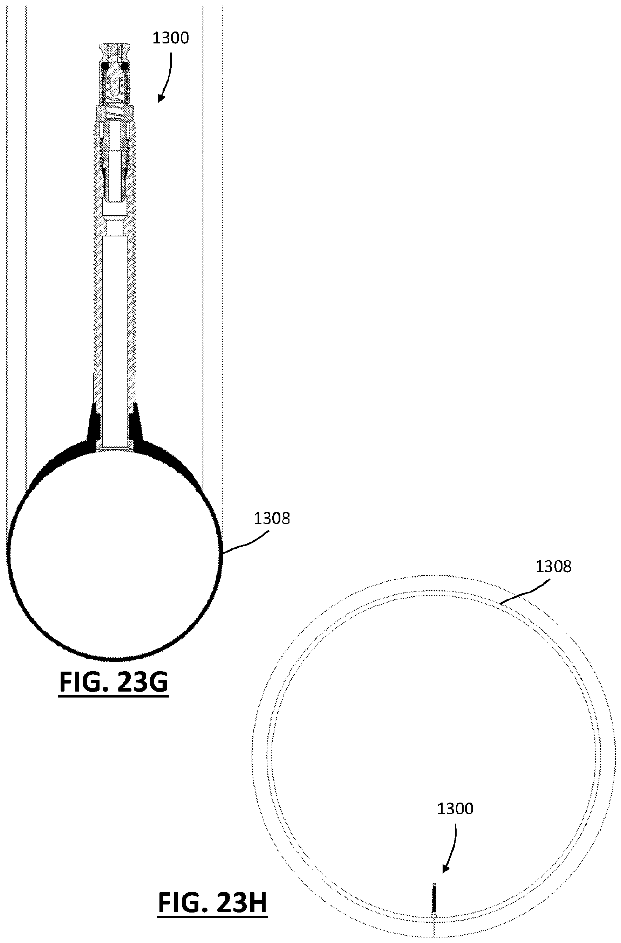

The rest of the core body 1318 is configured in the same manner as core body 1018. Further, the other components, such as the sealing plug 938, the valve seat 954 and the biasing member 936 remain the same. It should be appreciated that the valve 1300 may be used with a tubeless tire or with an inner tube 1308 (FIG. 23G, FIG. 23H).

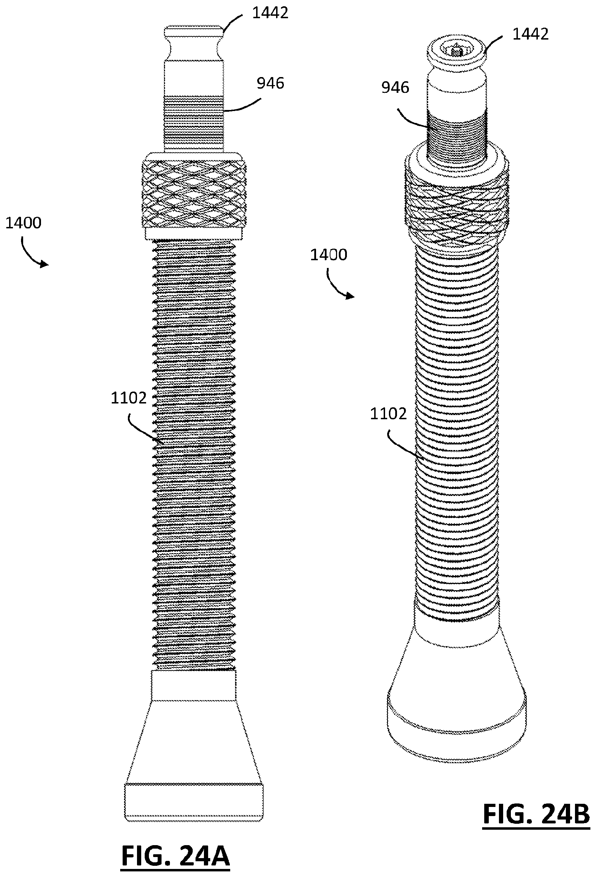

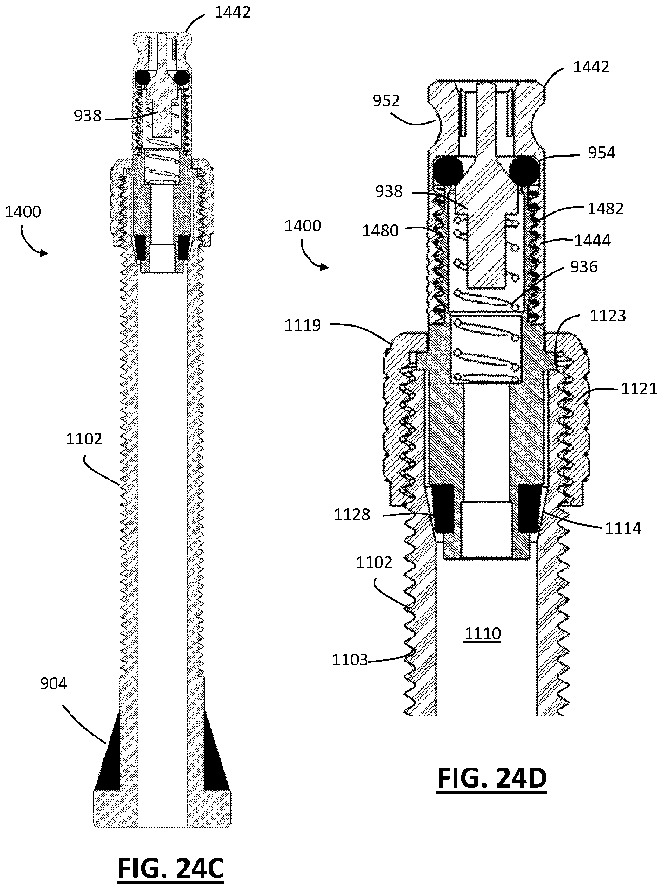

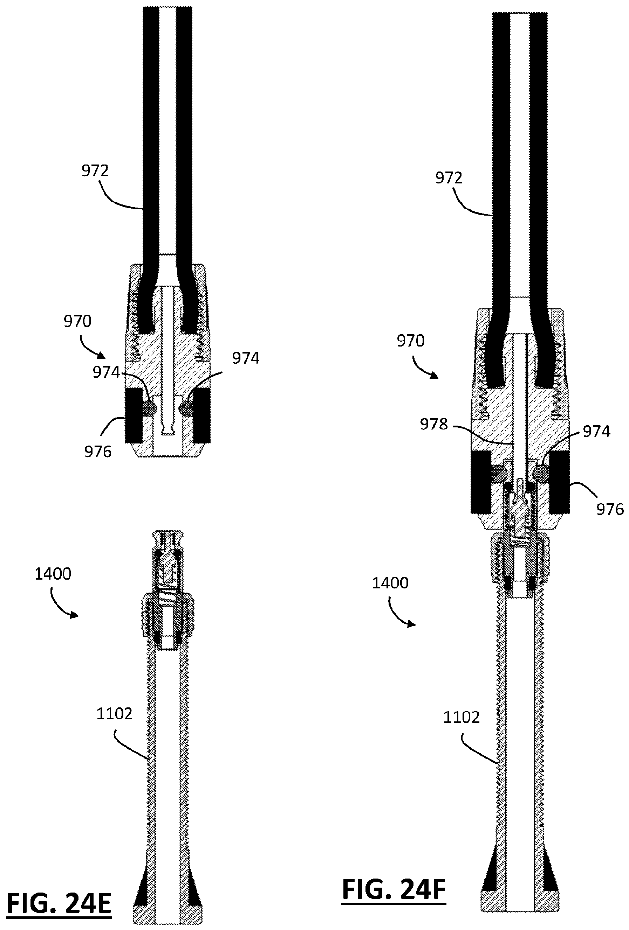

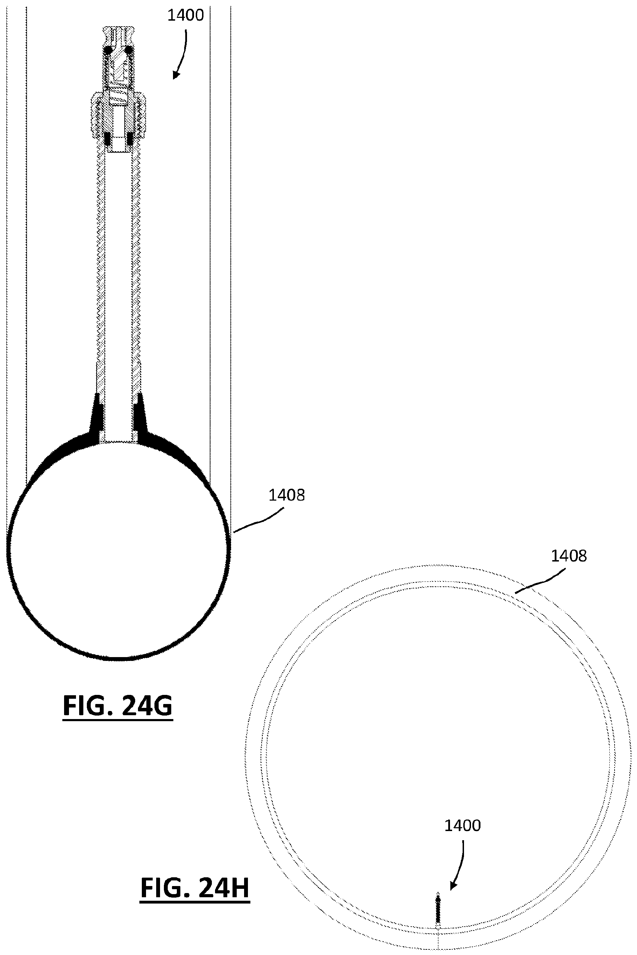

Referring now to FIGS. 24A - 22H, an embodiment is shown of a valve 1400 for a Dunlap-type valve stem that is similar to the valve 1100. For conciseness, only the differences between the valve 1100 and the valve 1400 will be described. In this embodiment, the difference between the valve 1100 and the valve 1400 is that that valve core assembly 1416 includes a cap member 1446 and a core body 1418 that are coupled by a fastening element, such as a screw threads 1480, 1482 on the wall 1444 and the valve portion 1426 respectively.

The rest of the core body 1418 is configured in the same manner as core body 1118. Further, the other components, such as the sealing plug 938, the valve seat 954 and the biasing member 936 remain the same. It should be appreciated that the valve 1400 may be used with a tubeless tire or with an inner tube 1408 (FIG. 23G, FIG. 23H).

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It should also be noted that the terms "first", "second", "third", "upper", "lower", and the like may be used herein to modify various elements. These modifiers do not imply a spatial, sequential, or hierarchical order to the modified elements unless specifically stated.

Various embodiments of the invention are described herein with reference to the related drawings. Alternative embodiments of the invention can be devised without departing from the scope of this invention. Various connections and positional relationships (e.g., over, below, adjacent, etc.) are set forth between elements in the following description and in the drawings. These connections and/or positional relationships, unless specified otherwise, can be direct or indirect, and the present invention is not intended to be limiting in this respect. Accordingly, a coupling of entities can refer to either a direct or an indirect coupling, and a positional relationship between entities can be a direct or indirect positional relationship. Moreover, the various tasks and process steps described herein can be incorporated into a more comprehensive procedure or process having additional steps or functionality not described in detail herein.

The following definitions and abbreviations are to be used for the interpretation of the claims and the specification. As used herein, the terms "comprises," "comprising," "includes," "including," "has," "having," "contains" or "containing," or any other variation thereof, are intended to cover a non-exclusive inclusion. For example, a composition, a mixture, process, method, article, or apparatus that comprises a list of elements is not necessarily limited to only those elements but can include other elements not expressly listed or inherent to such composition, mixture, process, method, article, or apparatus.

Additionally, the term "exemplary" is used herein to mean "serving as an example, instance or illustration." Any embodiment or design described herein as "exemplary" is not necessarily to be construed as preferred or advantageous over other embodiments or designs. The terms "at least one" and "one or more" may be understood to include any integer number greater than or equal to one, i.e. one, two, three, four, etc. The terms "a plurality" may be understood to include any integer number greater than or equal to two, i.e. two, three, four, five, etc. The term "connection" may include both an indirect "connection" and a direct "connection."

The terms "about," "substantially," "approximately," and variations thereof, are intended to include the degree of error associated with measurement of the particular quantity based upon the equipment available at the time of filing the application. For example, "about" can include a range of ± 8% or 5%, or 2% of a given value. Accordingly, the disclosure is not to be seen as limited by the foregoing description, but is only limited by the scope of the appended claims.

## Claims

1. A pneumatic valve (900) for a tire having a stem (902) fluidly coupled to a pressure vessel, the pneumatic valve (900) comprising:
a core body (918) configured to removably couple to the stem (902), the core body (918) having an interior passageway (921) in fluid communication with the stem (902);
a cap member (942) coupled to the core body (918), the cap member (942) having a concavity (952) on an outer diameter and a bore hole (948) extending from one end, the bore hole (948) being in selective fluid communication with the interior passageway (921), the cap member (942) having an interior portion, the core body (918) being at least partially disposed in the interior portion;
a valve seat (954) disposed in the interior portion between the core body (918) and the cap member (942);
a sealing plug (938) moveably disposed at least partially in the interior passageway (921) and at least partially within the bore hole (948); and
a biasing member disposed in the interior passageway (921) and arranged to bias the sealing plug (938) against the valve seat (954); **characterized in that** the cap member (942) is coupled to the core body (918) by a press fit; and
the cap member (942) includes a wall (944) disposed about the core body (918) and the core body (918) having a channel (945), wherein wall (944) is at least partially disposed in the channel (945).

2. The pneumatic valve (900) of claim 1, wherein the cap member (942) is coupled to the core body (918) by a fastener element.

3. The pneumatic valve of claim 1, wherein the wall (944) has an outer diameter with a surface roughness element formed thereon.

4. The pneumatic valve of claim 3, wherein the surface roughness element comprises a plurality of ring projections (946) or a thread element.

5. The pneumatic valve of claim 1, wherein the sealing plug (938) includes a pin portion (960) that extends through the bore hole (948) with a pin portion end (964) being offset from the end of the cap member (942) when the sealing plug (938) is in a closed position.

6. A bicycle tire comprising:
a pressure vessel;
a valve stem (902) sealingly coupled to the pressure vessel, the valve stem (902) having a central passageway (910) that is in fluid communication with the pressure and
a pneumatic valve (900) according to claim 1.

7. The bicycle tire of claim 6, wherein the cap member (942) is coupled to the core body (918) by a fastener element.

8. The bicycle tire of claim 6, wherein the wall has an outer diameter with a surface roughness element formed thereon.

9. The bicycle tire of claim 6, wherein the surface roughness element comprises a plurality of ring projections (946).

10. The bicycle tire of claim 6, wherein the surface roughness element is a thread element.

11. The bicycle tire of claim 6, wherein the sealing plug (938) includes a pin portion (960) that extends through the bore hole (948) with a pin portion end (964) being offset from the end of the cap member (942) when the sealing plug (938) is in a closed position.

12. The bicycle tire of claim 6, wherein the valve stem (902) is one of a Presta-type, a Schrader-type, or a Dunlap-type configuration.

13. The bicycle tire of claim 6, wherein the pressure vessel is one of a tubeless tire coupled to a rim or an inner-tube (908).

14. The pneumatic valve of claim 1, comprising the valve stem (902) configured to couple with the pressure vessel.

15. The pneumatic valve of claim 14, further comprising a rim gasket (904) coupled to an end (915) of the valve stem (902) opposite the cap member (942), the rim gasket (904) configured to seal against at least a portion of the tire.

## Patentansprüche

1. Pneumatikventil (900) für einen Reifen, das einen Schaft (902) aufweist, der strömungstechnisch mit einem Druckbehälter gekoppelt ist, wobei das Pneumatikventil (900) umfasst:
einen Kernkörper (918), der so konfiguriert ist, dass er abnehmbar mit dem Schaft (902) gekoppelt werden kann, wobei der Kernkörper (918) einen inneren Durchgang (921) aufweist, der mit dem Schaft (902) in strömungstechnischer Kommunikation steht;
ein Kappenelement (942), das mit dem Kernkörper (918) gekoppelt ist, wobei das Kappenelement (942) eine Konkavität (952) an einem Außendurchmesser und ein Bohrloch (948) aufweist, das sich von einem Ende erstreckt, wobei das Bohrloch (948) mit dem inneren Durchgang (921) in selektiver strömungstechnischer Kommunikation steht, wobei das Kappenelement (942) einen inneren Abschnitt aufweist, wobei der Kernkörper (918) zumindest teilweise in dem inneren Abschnitt angeordnet ist;
einen Ventilsitz (954), der in dem inneren Abschnitt zwischen dem Kernkörper (918) und dem Kappenelement (942) angeordnet ist;
einen Dichtstopfen (938), der beweglich zumindest teilweise in dem inneren Durchgang (921) und zumindest teilweise innerhalb des Bohrlochs (948) angeordnet ist; und
ein Vorspannelement, das in dem inneren Durchgang (921) angeordnet und so eingerichtet ist, dass es den Dichtstopfen (938) gegen den Ventilsitz (954) vorspannt; **dadurch gekennzeichnet, dass** das Kappenelement (942) durch eine Presspassung mit dem Kernkörper (918) gekoppelt ist; und das Kappenelement (942) eine Wand (944) beinhaltet, die um den Kernkörper (918) angeordnet ist und der Kernkörper (918) einen Kanal (945) aufweist, wobei die Wand (944) zumindest teilweise in dem Kanal (945) angeordnet ist.

2. Pneumatikventil (900) nach Anspruch 1, wobei das Kappenelement (942) durch ein Befestigungselement mit dem Kernkörper (918) gekoppelt ist.

3. Pneumatikventil nach Anspruch 1, wobei die Wand (944) einen Außendurchmesser mit einem darauf gebildeten Oberflächenrauheitselement aufweist.

4. Pneumatikventil nach Anspruch 3, wobei das Oberflächenrauheitselement eine Vielzahl von Ringvorsprüngen (946) oder ein Gewindeelement umfasst.

5. Pneumatikventil nach Anspruch 1, wobei der Dichtstopfen (938) einen Stiftabschnitt (960) beinhaltet, der sich durch das Bohrloch (948) erstreckt, wobei ein Stiftabschnittsende (964) vom Ende des Kappenelements (942) versetzt ist, wenn sich der Dichtstopfen (938) in einer geschlossenen Position befindet.

6. Fahrradreifen, umfassend:
einen Druckbehälter;
einen Ventilschaft (902), der dicht mit dem Druckbehälter gekoppelt ist, wobei der Ventilschaft (902) einen zentralen Durchgang (910), der in mit dem Druck in strömungstechnischer Kommunikation steht, und ein Pneumatikventil (900) nach Anspruch 1 aufweist.

7. Fahrradreifen nach Anspruch 6, wobei das Kappenelement (942) durch ein Befestigungselement mit dem Kernkörper (918) gekoppelt ist.

8. Fahrradreifen nach Anspruch 6, wobei die Wand einen Außendurchmesser mit einem darauf gebildeten Oberflächenrauheitselement aufweist.

9. Fahrradreifen nach Anspruch 6, wobei das Oberflächenrauheitselement eine Vielzahl von Ringvorsprüngen (946) umfasst.

10. Fahrradreifen nach Anspruch 6, wobei das Oberflächenrauheitselement ein Gewindeelement ist.

11. Fahrradreifen nach Anspruch 6, wobei der Dichtstopfen (938) einen Stiftabschnitt (960) beinhaltet, der sich durch das Bohrloch (948) erstreckt, wobei ein Stiftabschnittsende (964) vom Ende des Kappenelements (942) versetzt ist, wenn sich der Dichtstopfen (938) in einer geschlossenen Position befindet.

12. Fahrradreifen nach Anspruch 6, wobei der Ventilschaft (902) eines von einer Typ Presta-, einer Typ Schrader- oder einer Typ Dunlap-Konfiguration ist.

13. Fahrradreifen nach Anspruch 6, wobei der Druckbehälter eines von einem mit einer Felge gekoppelten schlauchlosen Reifen oder einem Innenschlauch (908) ist.

14. Pneumatikventil nach Anspruch 1, das den Ventilschaft (902) umfasst, der so konfiguriert ist, dass er mit dem Druckbehälter gekoppelt werden kann.

15. Pneumatikventil nach Anspruch 14, das weiter eine Felgendichtung (904) umfasst, die mit einem dem Kappenelement (942) gegenüberliegenden Ende (915) des Ventilschafts (902) gekoppelt ist, wobei die Felgendichtung (904) so konfiguriert ist, dass sie an zumindest einem Abschnitt des Reifens abdichtet.

## Revendications

1. Valve pneumatique (900) pour un pneu ayant une tige (902) couplée de manière fluidique à un récipient sous pression, la valve pneumatique (900) comprenant :
un corps de noyau (918) configuré pour se coupler de manière amovible à la tige (902), le corps de noyau (918) ayant un passage intérieur (921) en communication fluidique avec la tige (902) ;
un élément de capuchon (942) couplé au corps de noyau (918), l'élément de capuchon (942) ayant une concavité (952) sur un diamètre externe et un trou d'alésage (948) s'étendant depuis une extrémité, le trou d'alésage (948) étant en communication fluidique sélective avec le passage intérieur (921), l'élément de capuchon (942) ayant une partie intérieure, le corps de noyau (918) étant au moins partiellement disposé dans la partie intérieure ;
un siège de valve (954) disposé dans la partie intérieure entre le corps de noyau (918) et l'élément de capuchon (942) ;
un bouchon d'étanchéité (938) disposé de manière mobile au moins partiellement dans le passage intérieur (921) et au moins partiellement dans le trou d'alésage (948) ; et
un élément de sollicitation disposé dans le passage intérieur (921) et agencé pour solliciter le bouchon d'étanchéité (938) contre le siège de valve (954) ; **caractérisée en ce que**
l'élément de capuchon (942) est couplé au corps de noyau (918) par un ajustement serré ; et
l'élément de capuchon (942) comprend une paroi (944) disposée autour du corps de noyau (918) et le corps de noyau (918) ayant un canal (945), où la paroi (944) est au moins partiellement disposée dans le canal (945).

2. Valve pneumatique (900) selon la revendication 1, dans laquelle l'élément de capuchon (942) est couplé au corps de noyau (918) par un élément de fixation.

3. Valve pneumatique selon la revendication 1, dans laquelle la paroi (944) a un diamètre externe avec un élément de rugosité de surface formé sur celle-ci.

4. Valve pneumatique selon la revendication 3, dans laquelle l'élément de rugosité de surface comprend une pluralité de saillies annulaires (946) ou un élément fileté.

5. Valve pneumatique selon la revendication 1, dans laquelle le bouchon d'étanchéité (938) comprend une partie de broche (960) qui s'étend à travers le trou d'alésage (948), une extrémité de partie de broche (964) étant décalée par rapport à l'extrémité de l'élément de capuchon (942) lorsque le bouchon d'étanchéité (938) est en position fermée.

6. Pneu de bicyclette comprenant :
un récipient sous pression ;
une tige de valve (902) couplée de manière étanche au récipient sous pression, la tige de valve (902) ayant un passage central (910) qui est en communication fluidique avec la pression et
une valve pneumatique (900) selon la revendication 1.

7. Pneu de bicyclette selon la revendication 6, dans lequel l'élément de capuchon (942) est couplé au corps de noyau (918) par un élément de fixation.

8. Pneu de bicyclette selon la revendication 6, dans lequel la paroi a un diamètre externe avec un élément de rugosité de surface formé sur celle-ci.

9. Pneu de bicyclette selon la revendication 6, dans lequel l'élément de rugosité de surface comprend une pluralité de saillies annulaires (946).

10. Pneu de bicyclette selon la revendication 6, dans lequel l'élément de rugosité de surface est un élément fileté.

11. Pneu de bicyclette selon la revendication 6, dans lequel le bouchon d'étanchéité (938) comprend une partie de broche (960) qui s'étend à travers le trou d'alésage (948), une extrémité de partie de broche (964) étant décalée par rapport à l'extrémité de l'élément de capuchon (942) lorsque le bouchon d'étanchéité (938) est en position fermée.

12. Pneu de bicyclette selon la revendication 6, dans lequel la tige de valve (902) est l'une d'une configuration de type Presta, de type Schrader ou de type Dunlop.

13. Pneu de bicyclette selon la revendication 6, dans lequel le récipient sous pression est l'un parmi un pneu sans chambre à air couplé à une jante ou une chambre à air (908).

14. Valve pneumatique selon la revendication 1, comprenant la tige de valve (902) configurée pour se coupler au récipient sous pression.

15. Valve pneumatique selon la revendication 14, comprenant en outre un joint de jante (904) couplé à une extrémité (915) de la tige de valve (902) opposée à l'élément de capuchon (942), le joint de jante (904) étant configuré pour assurer l'étanchéité contre au moins une partie du pneu.
